# EUROPEAN PATENT SPECIFICATION

(11) **EP 3 442 828 B1**
(45) Date of publication and mention of the grant of the patent: **05.01.2022**
(21) Application number: 18737240.4
(22) Date of filing: 02.07.2018
(51) Int. Cl.: B60R 1/06

(54) **ASSEMBLY, METHOD FOR ASSEMBLING SUCH AN ASSEMBLY, METHOD FOR DISASSEMBLING SUCH AN ASSEMBLY, EXTERNAL REAR VISION DEVICE WITH SUCH AN ASSEMBLY AND MOTOR VEHICLE WITH SUCH A REAR VISION DEVICE**
BAUGRUPPE, VERFAHREN ZUM ZUSAMMENBAU EINER SOLCHEN BAUGRUPPE, VERFAHREN ZUM AUSEINANDERBAUEN EINER SOLCHEN BAUGRUPPE, EXTERNE RÜCKSICHTANORDNUNG SOWIE KRAFTFAHRZEUG MIT EINER SOLCHEN RÜCKSICHTANORDNUNG
ENSEMBLE, PROCÉDÉ D'ASSEMBLAGE D'UN TEL ENSEMBLE, PROCÉDÉ DE DÉMONTAGE D'UN TEL ENSEMBLE, RÉTROVISEUR EXTÉRIEUR AVEC UN TEL ENSEMBLE ET VÉHICULE AUTOMOBILE AVEC UN TEL RÉTROVISEUR

(30) Priority: 30.06.2017 DE 102017114746; 01.11.2017 US 201715800413; 15.03.2018 US 201815922366
(43) Date of publication of application: 20.02.2019
(73) Proprietor: SMR Patents Sarl, 2453 Luxembourg (LU)
(72) Inventor: LETTIS, Andrew, Portchester Hampshire PO16 9SD (GB); SCOTT-COLLINS, Callum, Portchester Hampshire PO16 9SD (GB); REHILL, Graham, Portchester Hampshire PO16 9SD (GB)
(74) Representative: Weber-Bruls, Dorothée
(86) International application number: PCT/EP2018/067845
(87) International publication number: WO 2019/002628

(56) References cited:
- EP-A1- 2 253 510
- EP-A1- 2 399 780
- DE-A1-102013 225 798

## Description

The present invention refers to an assembly, in particular comprising a head assembly, for an external rear vision device to be attached to a motor vehicle, said assembly comprising a lower casing element, an upper casing element, an articulation assembly and a bezel assembly for carrying at least one rear vision element. It also refers to a method for assembling as well as a method for disassembly such an assembly. Further, it refers to a rear vision device with such an assembly and a motor vehicle with such a rear vision device.

FR 2 605 567 A1 relates to an external rear view mirror that is connected to a motor vehicle by a base and a ball-and-socket arrangement. The ball of said arrangement is generally hollow and relatively large with respect to base to allow smaller bases to be used and to allow attachment to the vehicle internally of the base. The mirror is mounted on the ball by way of a rod, and a pressure-piece within the ball and held by a spring. The ball is formed from two parts connected together at a snap-fit.

EP 2 492 145B1 refers to an external rear view mirror with a mirror head and a mirror base, which are covered with at least one body element in the form of a body frame, a body cap and a mirror base cover, and a mirror glass that is installed rigidly relative to the mirror head. The mirror head rests on the mirror base; the body cover of the mirror head is composed of multiple pieces of the body frame and the body cap; and the mirror base is equipped with a mirror base cover, wherein the body cap has an opening designed for the passage of the mirror base and the mirror base cover. The mirror base is rigidly connected to a mirror carrier that carries an electrical glass adjustment drive, wherein the glass adjustment drive is connected to at least one body element.

A modular rear view mirror is known from EP 2 253 510 A1.

Another external rear view mirror assembly for a motor vehicle having a mirror base or foot provided for arrangement on the motor vehicle and a mirror head arranged on the mirror foot as well as a mirror glass accommodated in the mirror head and arranged rigidly and fixed non adjustably with respect thereto, is known from EP 2 492 144 B1. At least one articulation is provided between the mirror head and the arrangement of the mirror foot on the motor vehicle, said articulation comprising a total of two articulation axes, the direction vectors of said articulation axes being independent of each other, and wherein the two articulation axes are associated, jointly and/or independently of each other, to swiveling at least the mirror head from an operating position to a swung-in position and vice versa, to swinging-in at least the mirror head in and against the direction of motion, as well as adjusting an individual adjusting position of at least the mirror glass by adjusting the mirror head depending on, e.g., the seating position and the height of a driver of the motor vehicle, as well as having a first adjusting drive driven by an electric motor and associated to a first articulation axis of the two articulation axes and having a second adjusting drive driven by an electric motor and associated to a second articulation axis of the two articulation axes.

An exterior mirror assembly with an optical display having a mirror base and a mirror head and at least one housing cover having a recess for a reflective element is known from DE 10 2013 225 798 A1, wherein the optical display behind the reflective element is arranged inside the mirror head so that light of the optical display passes through the reflective element, and wherein the reflective element is mounted on a support plate with an articulation means and the optical display is arranged in a space between the articulation means and the support plate.

An exterior rearview mirror assembly according to WO 2013/126719 A2 includes a non-movable portion, a movable portion and a mirror head. The non-movable portion is configured for attachment at an exterior portion of a vehicle and the movable portion is movable relative to the non-movable portion. The mirror head is movable relative to the movable portion, and a mirror reflective element is fixedly attached at the mirror head. A first actuator is operable to move the movable portion relative to the non-movable portion about a first axis and a second actuator is operable to move the mirror head relative to the movable portion about a second axis. The first and second actuators are cooperatively operable to move the movable portion about the first axis and to move the mirror head about the second axis, and the mirror reflective element moves in tandem with movement of the mirror head.

EP 2 399 780 A1 discloses an exterior rearview mirror that has a two-part exterior rearview mirror housing which has an opening for a mirror glass. The exterior rearview mirror housing accommodates a base support, on which the mirror glass is arranged in an adjustable manner. Snap-in connections are provided between the housing parts and between each one of the housing parts and the base support.

WO 2016/088115 A2 refers to a method for manufacturing an automotive mirror, in particular a side mirror, comprising the following steps: forming a printed circuit board as flexible printed circuit board with n+1 branches, n ∈ N; providing n modules each comprising at least one electronic element housed within a plastic casting and connected to conducting paths on at least one of the surfaces of the plastic casting, and at least one standard gripping point, guiding structure, snap connection element and/or sealing member provided by the plastic casting; connecting up to n of said branches to one module each and connecting one branch to cables or a cable harness to be connected to a power supply and/or a control unit outside the mirror; providing mirror parts free of electronic elements; and assembling the mirror parts and the modules.

It is the object of the present invention to further develop the known assembly to facilitate assembly and disassembly thereof and enhance serviceability.

This object is solved according to the features of claim 1 by a hinge connection between the bezel assembly and a first sub assembly provided by at least the lower casing, the articulation assembly and attachment means, with the articulation assembly being mounted on the attachment means or the attachment means being mounted on the articulation assembly, and at least one snap, latch and/or clip connection between the bezel assembly and the first sub assembly to provide a second sub assembly. Between the bezel assembly and the upper casing element and/or between the upper casing element and the attachment means and between the upper casing element and the lower casing element a further or the same at least one snap, latch and/or dip connection can be provided.

It is also proposed that the hinge connection is provided between one end of the bezel assembly and a cradle of the attachment means and allows for a rotation of the bezel assembly, preferably between an upper end of the bezel assembly and an upper end of the cradle to allow for a downward rotation of the bezel assembly to attach the bezel assembly to the lower casing via the at least one snap, latch and/or clip connection.

With the invention it is further proposed that the hinge connection is provided by at least one opening and/or slot, in particular 4 openings and/or slots, with preferably each pair of one opening and one slot having a narrow key way cross section, and an axle, hook and/or a tab suited to be inserted into the opening and/or slot, wherein preferably the opening and/or slot is provided by the cradle such that the axle and/or tab of the bezel assembly can be inserted from above into the opening and/or slot.

Preferred embodiments of the invention are characterized by a first snap, latch and/or clip connection between the bezel assembly, preferably between the lower end of the bezel assembly, and the lower casing element, and/or a second snap, latch and/or clip connection between the bezel assembly, preferably between the lower end of the bezel assembly, and a lower cradle of the attachment means, and/or a third snap, latch and/or clip connection between the bezel assembly, preferably between the lower end of the bezel assembly, and a lower cradle of the attachment means as well as the lower casing element, and/or a forth snap, latch and/or clip connection between the bezel assembly, preferably between the upper end of the bezel assembly, and the upper casing element, and/or a fifth snap, latch and/or clip connection between the attachment means, preferably between an upper cradle of the attachment means, and the upper casing element, and/or a sixth snap, latch and/or clip connection between the lower casing element and the upper casing element, and/or a seventh snap, latch and/or clip connection between a light module, in particular a turn signal indicator module and/or a blind spot monitor module, and the lower casing element and/or the upper casing element, and/or an eighth snap, latch and/or clip connection between a Bluetooth module and the light module, the lower casing element and/or the upper casing element.

In addition, it is proposed that the lower casing element is provided with at least one hole functioning as a drain hole and/or enabling relieving the first, third, sixth, seventh and/or eights snap, latch and/or clip connection.

Further it is proposed that a button and/or functional module, comprising a light module, in particular in form of a turn signal indicator module and/or a blind spot monitor module, a camera module, a Bluetooth module and/or a sensor module, in particular a temperature sensor, preferably moveably insertable into the hole.

According to the invention, the turn signal indicator module and the blind spot monitor module can be formed as a single unit immovably attached to each other in form of a combined module and share at least one of a light source or a printed circuit board.

It is also proposed that the first, third, sixth, seventh and/or eighth snap, latch and/or clip connection comprises at least one element in the region of a rim of the lower casing element and/or integrally formed with the lower casing element, and/or the first, second, third and/or forth snap, latch and/or clip connection comprises at least one element integrally formed with the bezel assembly.

It is preferred that attachment of the bezel assembly to the lower casing is fixing the button and/or the functional module within the head assembly and/or closing a gap between the upper and/or lower casing on the one side and the bezel assembly on the other side, and/or at least one clip element, preferably of the bezel assembly, and/or at least one nose, shoulder or projection of the button and/or the functional module is suited for fixing the button and/or the functional module.

It is also proposed that the light module, preferably the turn signal indicator module, is provided with at least one, preferably arc shaped, first nose or projection engaging, a preferably U shaped recess of, a projection of the bezel assembly, and/or the light module, preferably the turn signal indicator module, is provided with at least one second nose, shoulder or projection engaging a further projection of the bezel assembly.

According to an alternative embodiment of the invention, the light module comprises one or more tabs and one or more clips, the lower casing element comprises one or more tab receiving portions, and the one or more tab receiving portions of the lower casing element are configured to receive the one or more tabs of the light module.

For this embodiment it is proposed that the light module is configured to lock and attach to the lower casing element by pressing the light module on the lower casing element and sliding the light module with respect to the lower casing element, with preferably the light module sliding along a curved edge of the lower casing element until one or more retaining clips are engaged, and/or preferably the light module being locked in position via a series of vertical control tabs along the lower casing element.

Still further, it is proposed according to the invention that the third snap, latch and/or clip connection is provided by at least one element integrally formed with the lower cradle, and/or the bezel assembly is provided with at least one first projection suited for extending through a bracket of the lower casing element and engaging the lower cradle, the bezel assembly is provided with at least one second projection suited for being inserted into a recess provided by the lower casing element, and/or the bezel assembly is provided with at least one shoulder suited to act as a stop element, preferably by abutting against the rim of the lower casing element; and/or the lower casing element is provided with an extension suited for engaging the lower cradle, preferably for resting in a seat provided by the lower cradle when the second or third sub assembly is assembled.

It is preferred according to the invention that the first projection, the second projection and the shoulder are provided by a datum of the bezel assembly.

It is also proposed that the forth snap, latch and/or clip connection is provided by at least one hoop clip of the upper casing element into which the tab of the bezel assembly and/or at least one hook of the upper cradle can be inserted.

Furthermore it is preferred that the fifth snap, latch and/or clip connection is provided by at least one projection or ledge of the bezel assembly suited to engage the at least one hoop clip of the upper casing element.

It is preferred according to the invention that a spring element is acting on the bezel assembly.

The invention also provides a method for assembling the assembly of the present invention, comprising the steps of: providing the first sub assembly, preferably with the turn signal indicator module attached to the lower casing, hinging the upper end of the bezel assembly into the first sub assembly, preferably via the cradle or upper cradle, rotating the lower end of the bezel assembly downwardly, in particular against the force of the spring element, and clipping the lower end of the bezel assembly at least to the lower casing element a to form the second sub assembly.

It is preferred that the method for assembling the head assembly further comprises the step of clipping the upper casing element onto the second sub assembly, in particular onto the bezel assembly and/or the cradle or upper cradle and the lower casing element.

The invention also provides a method for disassembling the assembly of the invention, comprising the steps of relieving the connection between the lower end of the bezel assembly and the lower casing element, in particular the bezel assembly, the lower casing element and the lower cradle, through the hole and/or via the button and/or via the functional module within the lower casing element, and rotating the lower end of the bezel assembly, in particular via the force of the spring element, upwardly and hereby releasing the upper casing element.

This method further comprises the step of drawing the bezel assembly out of the hinge connection with the cradle or upper cradle.

In addition, the present invention provides a rear vision device with a head assembly of the invention, wherein at least one rear vision element is attached to the bezel assembly, with the rear vision element comprising a reflective element and/or a camera, and the articulation assembly being suited to move at least the at least one rear vision element.

Finally, the invention also provides a motor vehicle with at least one rear vision device of the invention, wherein at least the cradle or upper cradle is moveably attached to the motor vehicle via a foot assembly fixed to the motor vehicle.

The assembly of the invention allows for a consistent assembly and disassembly method without breaking or removing a reflective element attached thereto for service. Further, the assembly allows for either tier 1 manufacturer or final customer to assemble without special tools.

According to the invention a bezel assembly is mounted on the top of a cradle attached to an articulation assembly supported by a lower casing element. This attachment makes usage of a hinged mechanism allowing the bezel assembly to be rotated in order to be located at and clipped to the lower casing element creating a sub assembly in form of a rigid framework. Said sub assembly can be closed by clipping a scalp in form of an upper casing element thereon to form a new sub assembly. The advantage of this structure is in particular due to the fixed hinges providing a fixed rotation axis allowing consistent and repeatable assembly of the bezel assembly, which in turn allows for possible additional self docking positions for electrical connectors for heating means and/or lighting means and for the reflective element e.g. in form of an electrochromic mirror glass. Further, access holes, which are provided by drain holes positioned in the lower casing element, do provide access to bezel assembly securing clips in order to release the connection between the lower casing element and the bezel assembly such that a service solution is given to gain access to the internals of the assembly without damaging component parts thereof. Still further, scalp retaining clips are integrated into the hinge system of the bezel assembly, therefore during the disassembly rotation process of the bezel assembly, the scalp retaining clips disengage from the scalp by rotating and allowing for the scalp to be removed without damage. The bezel assembly can then be removed and/or replaced if required.

Thus, a simple hinged module in form of the assembly can be supplied separately from the remaining rear vision device components comprising at least one reflective element and/or camera, which can be in form of an electrochromic mirror glass. This allows late configuration at a car manufacturer or supplier to provide the required legal glass types resulting in reduced mirror assembly variants lineside.

The invention, together with further objects and advantages, may be best understood, by example, with reference to the following description of embodiments taken together with the accompanying schematic drawings:
- Figure 1a: is a perspective view of a first sub assembly of a first embodiment of a rear vision device of the invention;
- Figure 1b: is an enlarged side view of an upper part of the first sub assembly of the invention;
- Figure 2a: is a side view of the first sub assembly assembly of figure 1a having a bezel assembly hinged thereon;
- Figure 2b: is an enlarged side view of an upper part of the first sub assembly of the invention with the hinged bezel assembly;
- Figures 3a to 3c: are perspective views demonstrating the attachment of the bezel assembly to the first sub assembly to provide a second sub assembly by rotating the bezel assembly;
- Figure 4a: is a front view of the second sub assembly;
- Figure 4b and 4c: are perspective views of clip connections of the second subassembly, taken along the line A-A and B-B of figure 4a, respectively;
- Figure 5a: is a front view of the second sub assembly as figure 4a;
- Figure 5b: is a perspective view of a locking connection of the second subassembly, taken along the line A-A of figure 5a;
- Figure 6a: is a perspective view of a third sub assembly in form of a head assembly of the invention;
- Figure 6b: is an enlarged side view of an upper part of the third sub assembly of figure 6a;
- Figure 7a: is another perspective view of the third sub assembly;
- Figure 7b: is a cross section of the third subassembly, taken along the line A-A of figure 7a;
- Figure 7c: is a cross section of a second embodiment of the head assembly of the invention;
- Figure 7d: is a cross section of a third embodiment of the head assembly of the invention;
- Figures 8a to 8d: are side views of a forth embodiment of an assembly of the invention demonstrating the attachment of a bezel assembly to a first sub assembly, in particular a cradle thereof, to provide a second sub assembly by rotating the bezel assembly;
- Figures 9a to 9d: are perspective part-views of the forth embodiment of the invention explain the function of a turn signal indicator in securing the assembly;
- Figures 10a to 10c: are diagrams illustrating a fixed glass mirror assembly with a combined side turn indicator module and blind spot monitor module as a common assembly; and
- Figures 11 and 12: are diagrams illustrating attachment of a side turn indicator module with the lower casing of a rear vision device of the invention.

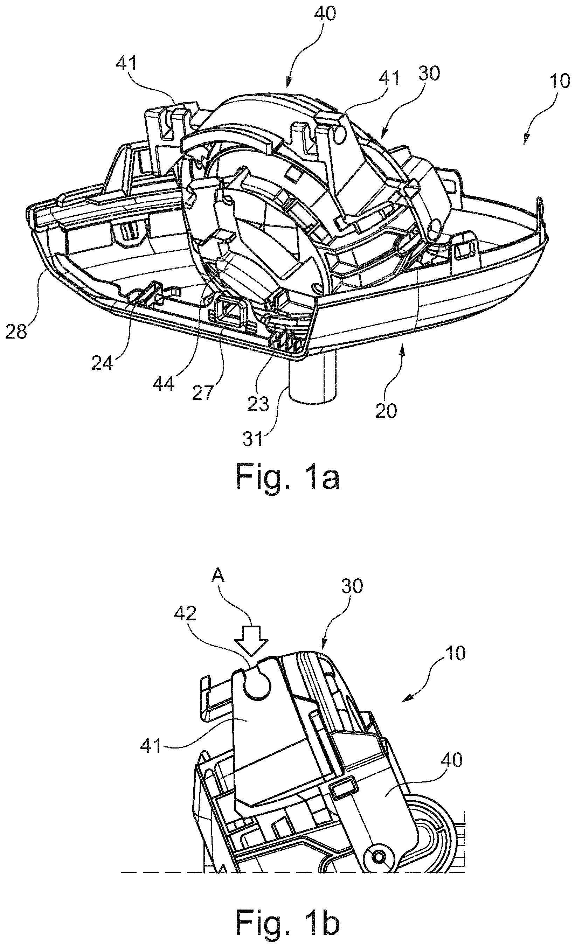

With respect to figures 1a to 6b the assembly of a head assembly 70 of the invention to be used in a rear vision device mounted to a motor vehicle is described. Such a rear vision device can be an external rear view mirror with an electrochromic mirror glass, but is not restricted thereto. Further, the whole head assembly 70 can be rotated around 1 or 2 axis relative to the motor vehicle or rather a foot assembly fixed to the motor vehicle.

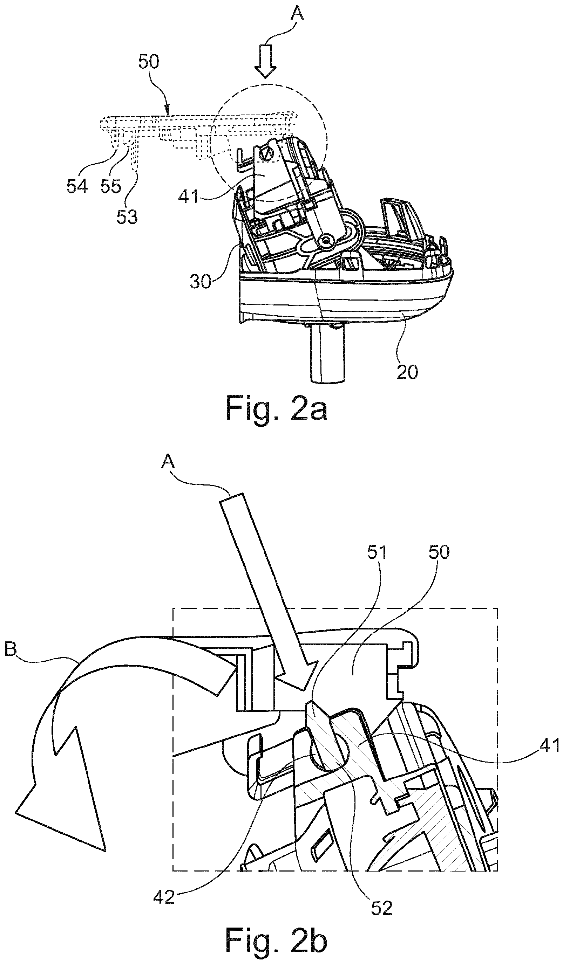

A first sub assembly 10 is shown in figure 1a. It comprises a lower casing element 20 supporting an articulation assembly 30 with a shaft 31 thereof extending through the lower casing element 20. The articulation 30 assembly is suited for moving the whole head assembly 70. Attachment means 40 in form of an upper cradle 41 and a lower cradle 44 are mounted on the articulation assembly 30. The upper cradle 41 comprises 2 openings 42, one of which is shown in more detail in figure 1b and the other one has the same principle structure. A bezel assembly 50 can be mounted on the first sub assembly 10 by inserting tabs 51 carrying an axle 52 into the openings 42 each of which having a narrow key way cross section in order to obtain a hinge connection between the upper cradle 41 and the bezel assembly 50, as shown in figure 2a. In fact each tab 51 is slid into the corresponding opening 42 provided in a conical datum of the upper cradle 41 from above as indicated by the arrow A in figure 2a such that the bezel assembly 50 can be rotated around the axle 52 as indicated by the arrow B in figure 2b.

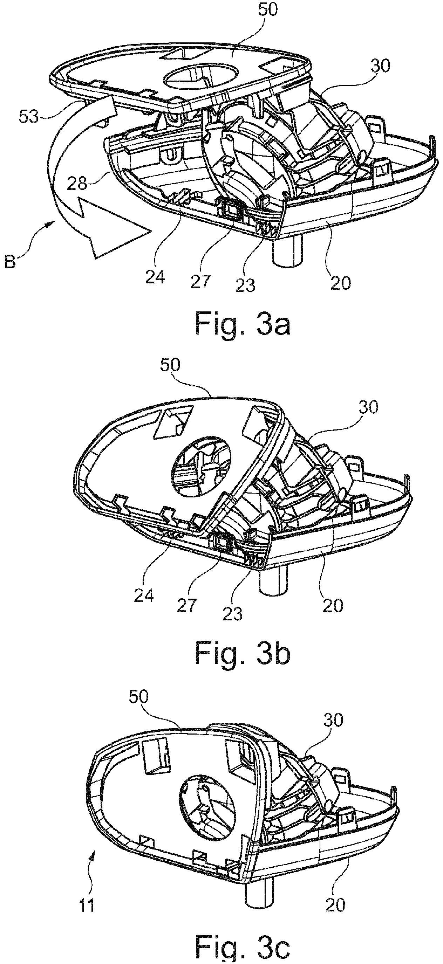

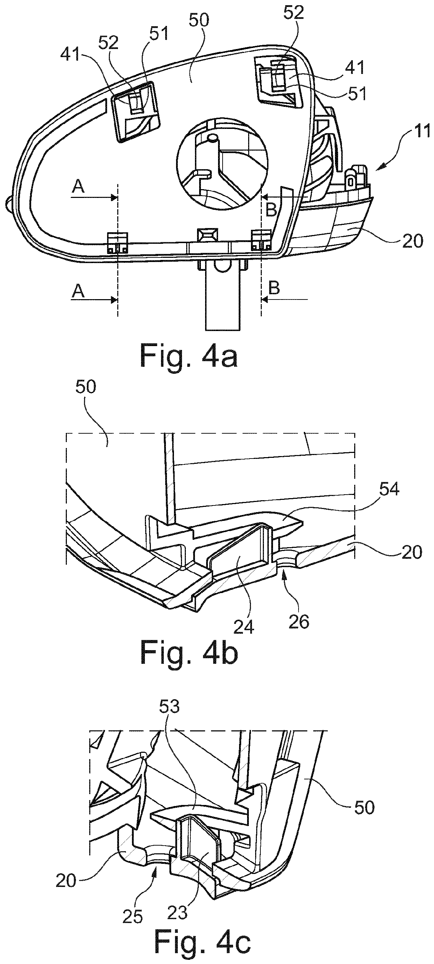

Once the bezel assembly 50 is located into the upper cradle 41, as shown in figure 3a again, it can be rotated down and clipped into the lower casing element 20, see figures 3b and 3c. As soon as the bezel assembly 50 is attached to the upper cradle 41 and the lower casing element 20, a second sub assembly 11 is provided as shown in figure 3c. Attachment details of the bezel assembly 50 to the lower casing element 20 are described in the following with respect to figures 4a to 4c. Figure 4a is again showing the second sub assembly 11 with two cut lines A-A and B-B providing the two detailed figures 4b and 4c. Both figures 4b and 4c are showing a clip engagement between a clip element 23, 24 of the lower casing element 20 and a complementary clip element 53, 54 of the bezel assembly 50.

Both clip engagements shown in figures 4b and 4c are arranged in the region of a rim 28 of the lower casing element 20, and on the left and on the right side in the front view of figure 4a. For dissembling the left clip engagement shown in figure 4b the clip element 54 can be relieved from the clip element 24 by applying a pressing action through a drain hole 26 within the lower casing element 20. The disassembly of the right clip engagement shown in figure 4c functions in a similar way by relieving the clip element 53 of the bezel assembly 50 from the clip element 23 of the lower casing element 20 through a further drain hole 25 provided within the lower casing element 20.

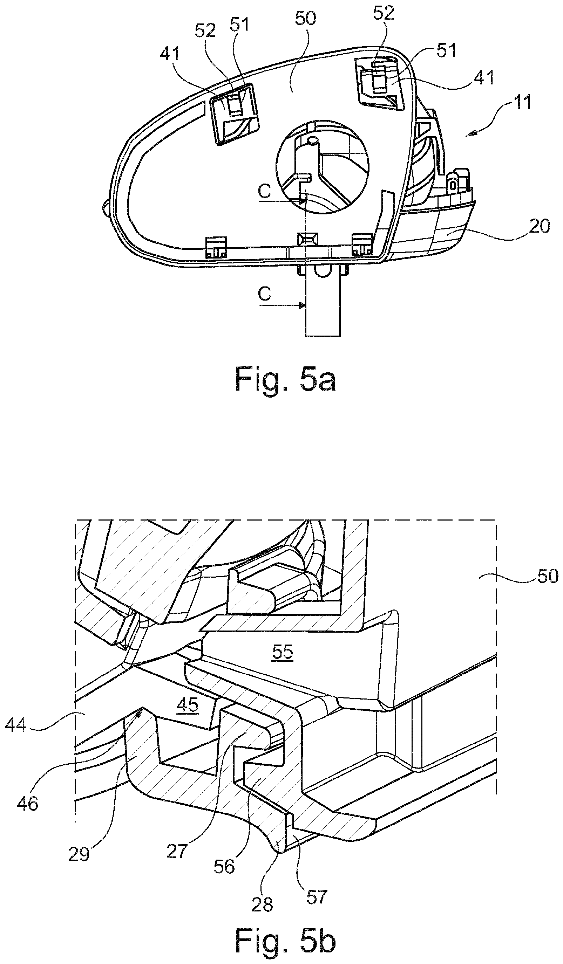

Figure 5a shows again the second sub assembly 11 with a cut line C-C, and figure 5b is depicting the respective section to provide further details on how the bezel assembly 50 is locked on the lower casing element 20 as well as the lower cradle 44 of the attachment means 40 of the articulation assembly 30. In fact, the bezel assembly 50 has a datum with a locking extension 55 entering a locking bracket 27 of the lower casing 20 and an abutment projection 56 entering a space defined by the lower part of the bracket 27 in the region of the rim 28, with a shoulder 27 of the datum providing a stop element by engaging the rim 28. In addition, the locking extension 55 engages an extension 45 of the lower cradle 44 which has the shape of an elbow in cross section providing a seat 46 for an upwardly extending extension 29 of the lower casing element 20. Thus, the bezel assembly datum forces the parts 20, 40 and 50 together.

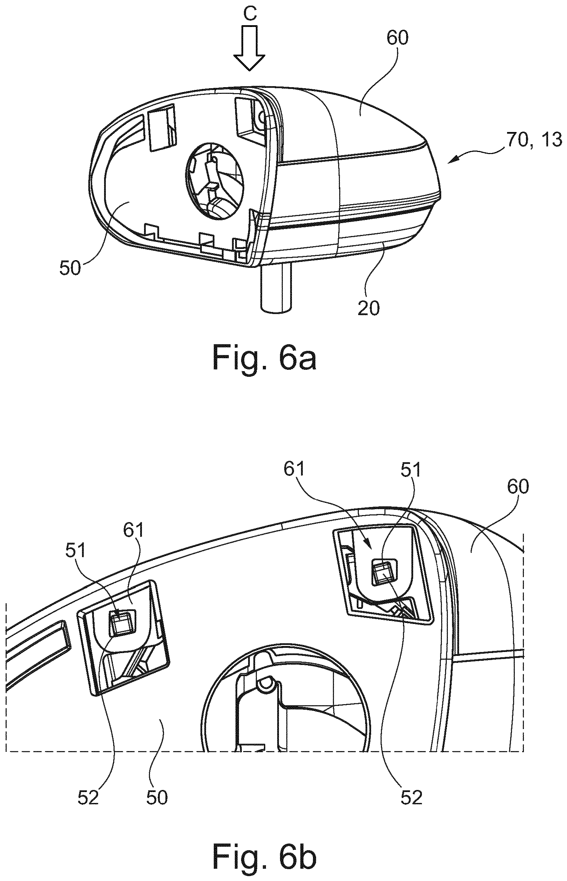

In order to provide the head assembly 70 an upper casing element 60 is to be attached from above as indicated in figure 6a by arrow C. Figure 6a is depicting a third sub assembly 13 with the upper casing 60 and thus the head assembly 70 of the invention. From figure 6b it can be seen that the upper casing 60 is clipped to the bezel assembly 50 as the tabs 51 enter hoop clips 61 of the upper casing 60.

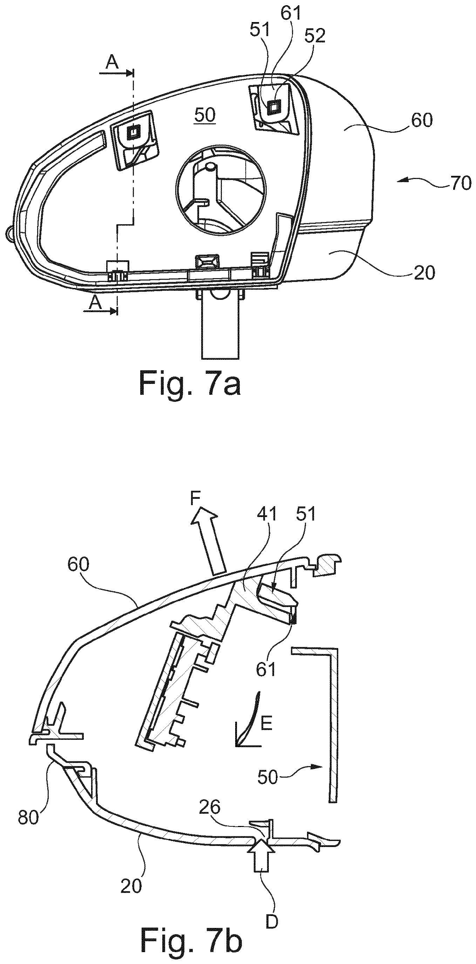

Figure 7a shows another view of the head assembly 70 together with a cut line A-A. Figure 7b provides a sectional view along this cut line after the lower clip engagements of the bezel assembly 50 have been relieved by applying a force through the drain holes 25, 26 in the direction of the arrow D in figure 7b. This allows the bezel assembly 50 to rotate as indicated by the arrow E. As the tabs 51 are integrated into the bezel assembly 50, the clips 61 of the upper casing element 60 are released when the bezel assembly 50 is rotating. While the bezel assembly 50 rotates upwardly the upper casing element 60 will pop of as indicated by the arrow F in figure 7b.

Thus, the head assembly 70 of the invention is a simple hinged module with the bezel assembly 60 being rotatable around the respective hinge provided between the bezel assembly 50 and the upper cradle 41 and can be clipped together with the other parts of the head assembly 70, namely in form of the lower casing element 20, the lower cradle 44 as well as the upper casing element 60.

Figure 7b also shows a latch connection 80 between the two casing elements 20, 60 which is releasable.

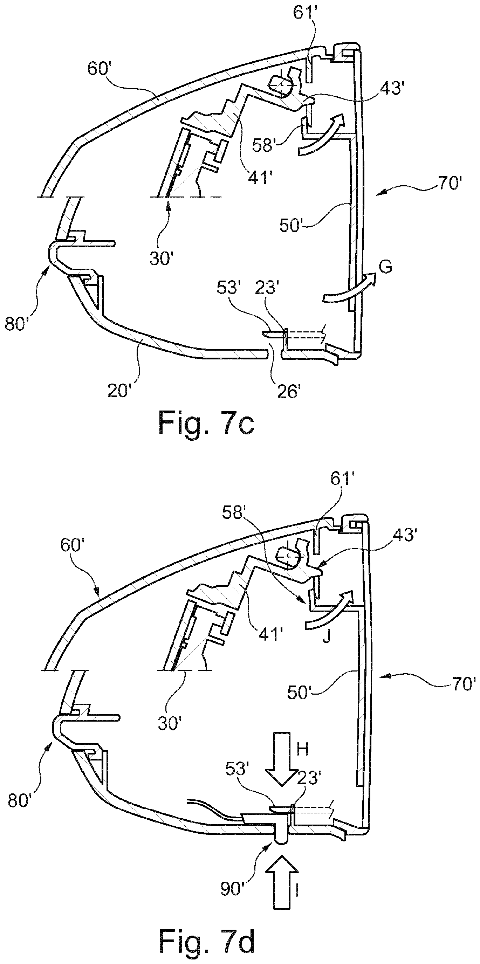

Figures 7c and 7d show two alternatives of the head assembly of the invention. In both cases the head assembly 70' still comprises the lower casing element 20' with the clip elements 23' and the drain hole(s) 26', the articulation assembly 30', the attachment means with the upper cradle 41' and the lower cradle, the bezel assembly 50' with the clip elements 53', the upper casing element 60' with the hoop clips 61' and the latch connection 80'.

To further facilitate in particular the disassembly of the head assembly 70', the upper cradle 41' is provided with hooks 43' for entering the hoop clips 61' and the bezel assembly 50' is provided with a ledge 58' for engaging the hoop clips 61'. The ledge 58' levers the hoop clips 61' off the hooks 43' during rotation of bezel assembly 50' for disassembly. Still further, it is beneficial to use a plastic integrated spring positioned to force spring the bezel assembly 50' away when the hoop clips 61' are disengaged, as indicated by the arrows G in figure 7c.

In order to provide the rear vision device of the invention, at least one rear vision element can be attached to the bezel assembly also acting as a backing plate for e.g. an electrochromic mirror glass. Different further functions and devices can be incorporated into and/or controlled with the help of a rear vision device comprising the head assembly of the invention, including in particular cameras. For example, one or more camera modules can be inserted into the bezel assembly.

Figure 7d depicts a temperature sensor 90' inserted in the hole 26' of the lower casing element 20'. This allows not only to measure the temperature, but further facilitates the disassembly of the head assembly 70' as the temperature sensor 90' also fulfills the function of a button to release the clips connection between the lower casing element 20' and the bezel assembly 50' via the respective clip elements 23', 53'.

The clip element 53' of the bezel assembly 50' provides a downward pressure on the temperature sensor 90' when the head assembly 70' is assembled, see arrow H in figure 7d. This assists in fixing the temperature sensor 90'. In order to disassemble the head assembly 70', a pushing action is to be applied on the temperature sensor 90' as indicated by the arrow I in figure 7d. As soon as the clips connection between the lower casing element 20' and the bezel assembly 50' has been released, the bezel assembly 50' can start to rotate as indicated by the arrow J in figure 7d.

It is especially useful to integrate further functions and devices into the head assembly or rather the rear vision device of the invention to enhance, extend and/or sustain the functionality of the rear vision device during normal or extreme conditions. This may include heating and/or cooling means, cleaning means such as wipers, liquid and/or gaseous sprays, actuator means, e.g. in form of the articulation assembly 30, for moving the rear vision device or parts of it, such as for example a display, a camera system and/or parts of a camera system, including for example lenses, filters, light sources, adaptive optics like deformable mirrors, sensors and/or mirrors, and/or actuator means for inducing movement of other objects, for example parts of the vehicle and/or objects surrounding the vehicle. Furthermore it can include linear tracks and/or rotating wheels, like for example a filter wheel, for exchanging optical elements, including for example lenses, mirrors, light sources, sensors, adaptive optics like deformable mirrors and/or filters.

Prominent examples for functions and devices incorporated into and/or controlled with the help of rear vision devices include also illumination devices, for example any kind of light module like an external light module, an internal light module, a front light, a back light, a fog light, a brake light, an acceleration light, a turn signal, a logo lamp, a puddle light, a flash light, a navigation light, a position light, an emergency light, a spotlight, a green light, a red light, a warning light, a turn signal light module, an approach light, a search light, an information light, a display and/or any combination thereof.

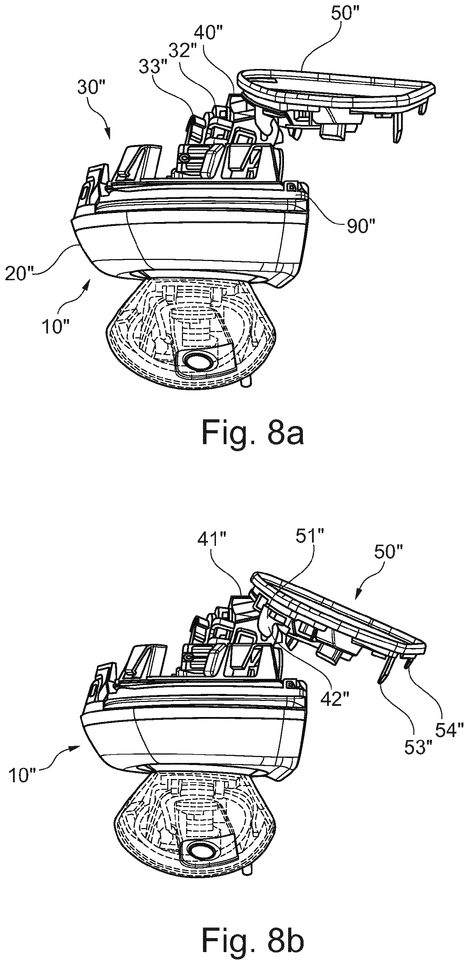

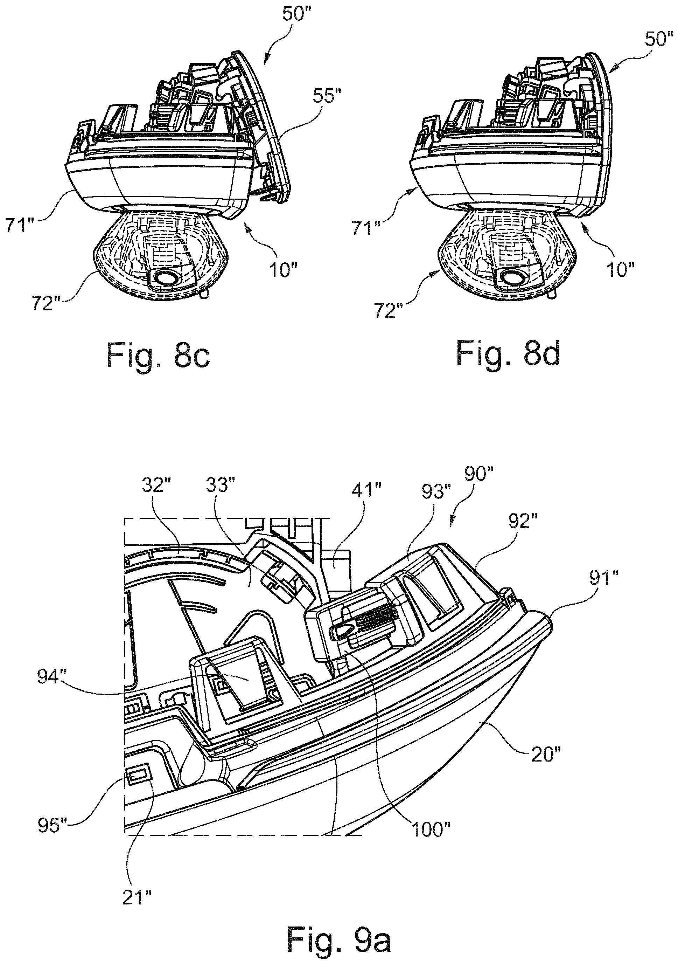

Figures 8a to 9d show a forth embodiment of an assembly of the invention on the basis of which the attachment of a bezel assembly 50" to a first sub assembly 10", in particular a cradle 41" of an attachment system 40" thereof, to provide a second sub assembly by rotating the bezel assembly 50" downwardly and connecting it to a lower casing element 20" is described, including the function of a turn signal indicator module 90" in securing the second sub assembly as well as closing gaps at the bezel assembly 50".

In detail, the first sub assembly 10" comprises parts of a mirror head 71" and a mirror foot 72", in particular in form of the lower casing element 20", an articulation assembly 30" for moving e.g. a mirror glass (not shown) and the attachment system 40", with the turn signal indicator module 90" being attached to the lower casing 20" as will be explained with reference to figures 9a to 9d. As can be seen in figures 8a to 8d, the articulation assembly 30" has a motor 32" attached to the cradle 41" of the attachment system 40" and a motor clamp 33" attached to the motor 32" as well as to the lower casing element 20". The cradle 41" is provided with openings 42" at its upper end, said openings 42" being suited for engaging tabs 51" provided together with a not shown axle a the upper end of the bezel assembly 50", with the openings 42" and the tabs 52" constituting a hinge connection in analogy to the ones described above.

As soon as the tabs 52" are engaged within the openings 42" the respectively formed hinge connection allows for the downward rotation of the bezel assembly 50" to finally connect the lower end of the bezel assembly 50" via its clips 53", 54" to the lower casing element 20". The respective clip connection results in urging the turn signal indicator module 90" outwardly against the lower casing element 20" resulting in closing the gap at the bezel assembly 50". A locking projection 55" of the bezel assembly 50" assists this closing.

The turn signal indicator module 90" comprises a light window 91" and a housing 92", with the housing 92" being formed with clip elements 93", 94" for attachment to a not shown upper casing as well as clip elements 95" for attachment to the lower casing element 20" by engaging holes 21" of the lower casing element 20", as can be best seen in figure 9a. In an alternative embodiment, some or even all clip elements can be provided by the light window.

A Bluetooth module 100" shown to be attached to the turn signal indicator module 90", is preferably detachable and enables for example usage of a smart phone as smart key to lock and unlock a vehicle to which a rear vision device with the second assembly is attached.

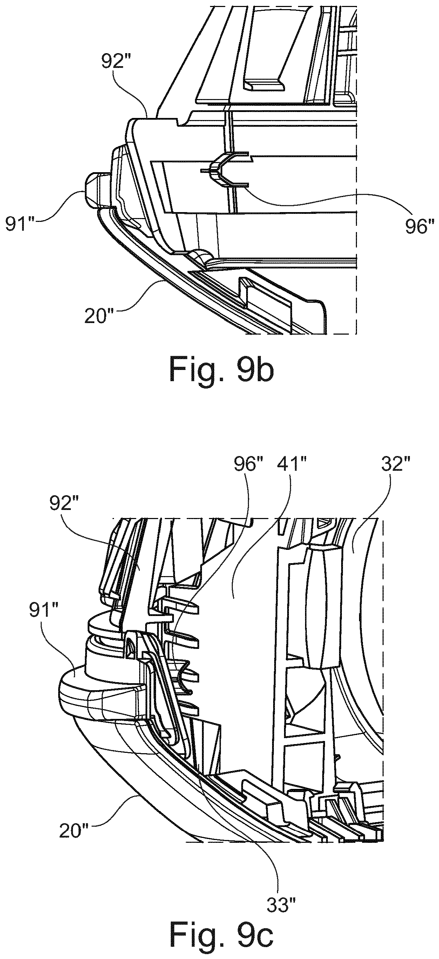

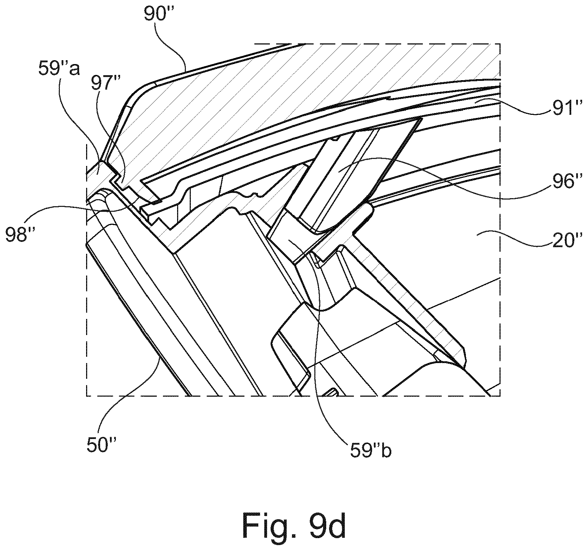

The turn signal indicator module 90" is provided with an arc shaped nose 96", see figures 9b and 9c, which is forced into a recess provided by a projection 59b" of the bezel assembly 50" when clipsing the bezel assembly 50" to the lower casing element 20" which in turn results in urging a shoulder 97" of the turn signal indicator module 90" against a further, peripheral projection 59" a of the bezel assembly 50", see figure 9d. Thus, the turn signal indicator module 90" is pressed outwardly and against the lower casing element 20" which in turn closes the gap of the lower casing at the bezel assembly 50".

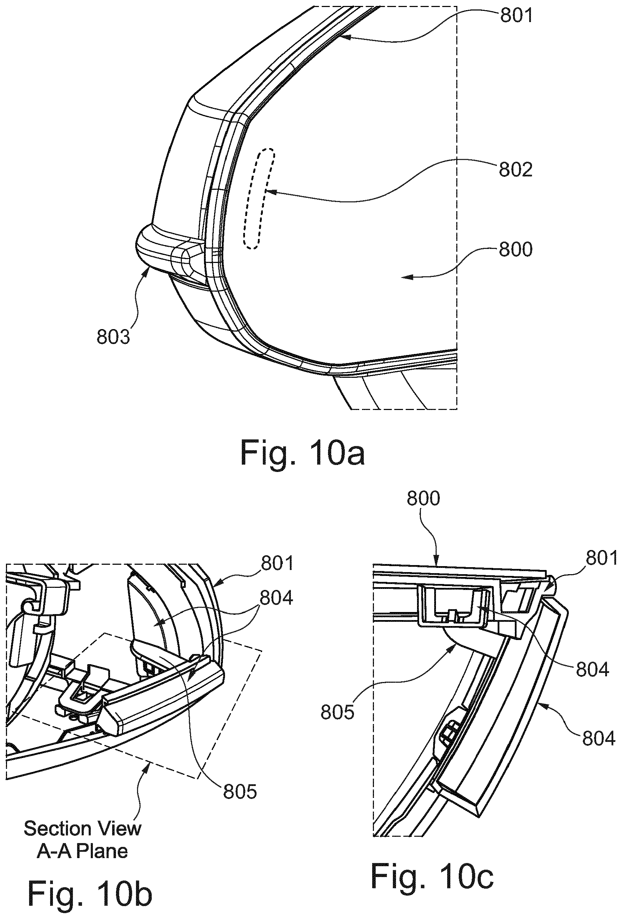

Referring to Figure 10a, as alternative to the simple turn signal indicator module 90" a side turn indicator module (STI module) 803 and blind spot monitor (BSM module) 802, which are provided as a single, combined light module 804 as opposed to being two separate light modules, are shown in their final arrangement within a rear vision device of the invention. The rear vision device is provided with a glass 800 and a bezel 801, with the perspective part view of Figure 10a illustrating that the indicator or light for the BSM module 802 is provided in the glass 800, whereas the STI module is arranged at the side of the bezel 801.

Figures 10b and 10c illustrate some details of the combine STI and BSM module 804, which is provided as a small module assembly in order to be integrated into the lower casing element. Combining the two modules gives the option to control them with the same or separate printed circuit boards /light sources. This also provides lower manufacturing cost, fewer parts and a more simple system that provides system as well as performance advantages.

The internal components of the combined STI and BSM module 804 are illustrated in the perspective part view of figure 10b. Accordingly, a connecting rib 805 is provided between the BSM portion 802 and the STI portion 803 of the combined module 804. A cross section further illustrating the inner portion and connection of the combined module 804 with the bezel 801 and the glass 800 is provided in figure 10c.

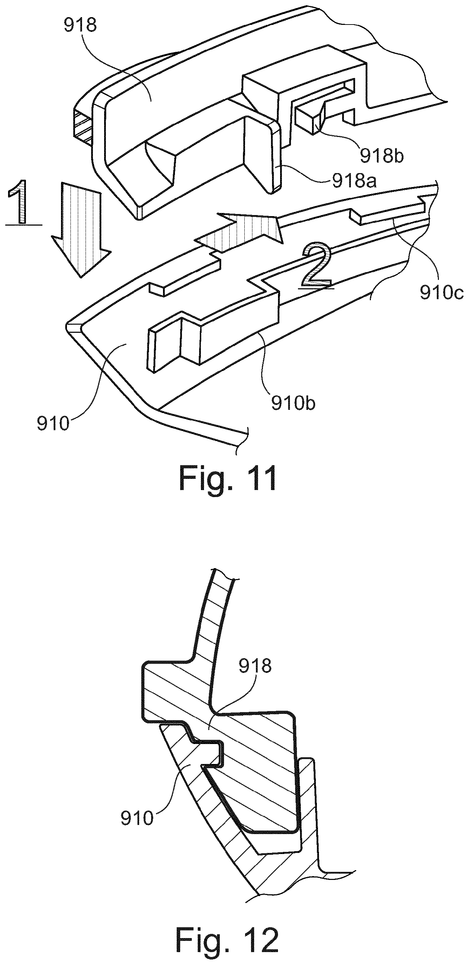

With respect to Figures 11 and 12 an alternative attachment of a light module such as a side turn signal indicator (STI) module 918 with a lower casing element 910 of a further rear vision device of the invention is described. Although an STI module 918 is described, any other light module for other functions may be used.

Referring to figure 11, the STI module 918 is first pressed down onto the lower casing element 910. As a result, a STI tab 918a engages a tab receiving portion 910b of the lower casing element 910, and vertical control tabs 910c are engaged. Once fully pressed down onto the lower casing element 910, the STI module 918 can be slid along a curved edge of the lower casing element 910 until one or more retaining clips 918b of the STI module 918 are engaged.

Figure 12 illustrates that once slid into place, the STI module 918 is locked in position. The STI module 918 to lower casing element 910 gap includes a series of the vertical control tabs 910c along the lower casing element 910 which allow locking of the STI module 918 in place. Further examples for functions and devices incorporated into and/or controlled with the help of rear vision devices may include for example a tiredness detection system, a microsleep detection system, a distance and/or velocity determination system, for example a LIDAR (Light detection and ranging) system, a blind spot indicator system, a lane change assistant system, a navigation assistant system, a tracking assistant system, a human-machine interaction system, a machine-machine interaction system, an emergency and precaution assistant system, like an accident avoiding assistant system, a counter-measures assistant system, a brake assistant system, a steering assistant system, an acceleration assistant system, an escape assistant system, including for example an ejection seat system, a direction indicator, a blind spot indicator, an approach system, a strong braking system, an emergency braking system, a charging status indicator, a vehicle mode system, including for example a sports mode system, an economy mode system, an autonomous drive mode system, a sleep mode system and an anti-theft system, a vehicle locked indicator system, a vehicle stolen indicator, a warning signal system, a temperature indicator system, a weather indicator system, a traffic light signal system, a fuel status system and/or any combination thereof.

An example for a rear vision device including an illumination device fulfilling the brake light functions is disclosed in German patent application No. 102012108488, filed on September 11, 2012 for REAR VISION ASSEMBLY FOR MOTOR VEHICLE. A light guidance unit for an illumination device used in a back vision system is disclosed in German patent application No. 102012104529, filed on May 25, 2012 for LIGHT GUIDANCE UNIT. An illumination device for a rear vision device is disclosed in German patent application No. 102012107833, filed on August 24, 2012 for ILLUMINATION DEVICE AND REAR VISION DEVICE. A lighting device for a back-vision unit is disclosed in German patent application No. 102012107834, filed on August 24, 2012 for LIGHTING DEVICE AND BACK-VISION UNIT which is hereby incorporated herein by reference. A housing and display device of a rear vision device is disclosed in European patent No. 2738043, filed on December 3, 2012 for HOUSING AND DISPLAY DEVICE. An optical light guide for a vehicle lighting unit is disclosed in European patent No. 2947378, filed on May 22, 2014 for OPTICAL LIGHT GUIDE FOR A VEHICLE LIGHTING UNIT. A display device of a rear vision device of a vehicle is disclosed in International patent application No. 2015/173695, filed on May 7, 2015 for DISPLAY DEVICE, REAR VIEW DEVICE AND MOTOR VEHICLE and claiming priority to European patent application No. 2944866, filed on May 12, 2014 for OPTICAL UNIT, DISPLAY DEVICE, REAR VIEW DEVICE AND MOTOR VEHICLE INCLUDING THE SAME. Further a light guiding device for an illumination device, in particular for a motor vehicle or a display device, in a rear vision device of a motor vehicle is disclosed in European patent application No. 3045944, filed on January 19, 2015 for LIGHT GUIDING DEVICE. Still further a light guiding device for an illumination device, especially for a motor vehicle or an indicator device in a rear vision device of a motor vehicle is disclosed in U.S. patent application No. 15/228,566, filed on August 4, 2016, for LIGHT GUIDING DEVICE and is a continuation-in-part of U.S. patent application No. 15/000,733, filed on January 19, 2016 for LIGHT GUIDING DEVICE. In addition, an illumination device, particularly for a rear-view device of a motor vehicle and a method for producing the same are disclosed in International patent application No. 2016/147154, filed on March 18, 2016 for ILLUMINATION DEVICE AND METHOD FOR PRODUCING AN ILLUMINATION DEVICE and claiming priority to German patent application No. 102015104163, filed on March 19, 2015 for ILLUMINATION DEVICE AND METHOD FOR PRODUCING AN ILLUMINATION DEVICE. An improved rear-view device for a motor vehicle which includes an electronic device is disclosed in U.S. patent application No. 15/256,532, filed on September 3, 2016 for ELECTRONIC DEVICE AND REAR-VIEW DEVICE and claiming priority to European patent application No. 3139711, filed on September 3, 2015 for ELECTRONIC DEVICE AND REAR VIEW DEVICE. A lighting device for a rear vision device or a footwell device of a vehicle, including at least one luminous means is disclosed in German patent application No. 102015115555, filed on September 9, 2015 for ILLUMINATION DEVICE, REAR VIEW DEVICE, FOOTWELL DEVICE AND VEHICLE. A light module for a light assembly of an exterior rear view device is disclosed in European patent application No. 3138734, filed on September 3, 2015 for LIGHT MODULE, LIGHT ASSEMBLY AND REAR VIEW DEVICE FOR A VEHICLE. A lighting device for a vehicle component, in particular for a rear vision device of a motor vehicle, including a logo lamp and a deflection mirror are disclosed in European patent application No. 3144183, filed on September 13, 2016 for LIGHTING DEVICE, VEHICLE COMPONENT AND VEHICLE and claiming priority to German utility patent application No. 202015104894, filed on September 15, 2015 for LIGHTING DEVICE, VEHICLE COMPONENT AND VEHICLE.

A camera module can include in particular a plurality of different optical elements, including a.o. a variety of sensors and light sources, as well as housing parts.

The housing of a camera module can be made out of plastic, metal, glass, any other suitable material and/or any combinations thereof and can be used in combination with the techniques described below to change or modify the properties of the material or the material surface. Housings are for example described in German patent application No. 102016108247.3, filed on May 3, 2016 for CLEANING SYSTEM FOR A CAMERA and U.S. patent application No. 15/281,780, filed September 30, 2016 for TELESCOPING REAR VISION ASSEMBLY WITH CAMERA AND LENS WIPING SYSTEM.

The camera can include for example CCD or CMOS or light field sensors, as for example described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION and U.S. patent application No. 09/771,140, filed on January 26, 2001 for MONITORING DEVICE FOR VEHICLES, IN PARTICULAR, MOTOR VEHICLES, now U.S. patent No. 6,703,925. Also an area of the sensor can be reserved for different purposes, for example to detect a test beam, as described in U.S. patent No. 8,031,224, filed on September 9, 2014 for CAMERA SYSTEM, METHOD FOR OPERATION OF A CAMERA SYSTEM AND SENSOR DEVICE OF A CAMERA SYSTEM.

The optical elements can be molded or formed from any type of glass or any other suitable material. Glass is here used in the meaning of a non-crystalline amorphous solid showing a glass transition when heated towards the liquid state. It includes for example the group of polymeric glasses, metallic glasses, silica glasses, but any other suitable material showing the glass transition can also be used. The glass can be either in a flat, wedge, rectangular, cylindrical, spherical, conical, elliptical, and/or circular shape, as described for example in German patent application No. 102016108247.3, and German patent application No. 102011103200, filed on May 31, 2011 for LIGHT WINDOW FOR USE AS LIGHT CONDUCTOR FOR TURN INDICATOR IN OUTSIDE MIRROR ARRANGEMENT OF VEHICLE, HAS UNCOUPLING STRUCTURES AT CERTAIN LOCATION OF WINDOW, AND OPTICAL FILM WITH MOLDED COATING AND PROVIDED WITH UNCOUPLING STRUCTURES, or have a shape according to different needs or lens types. As non-limiting examples camera modules can be equipped with lenses, like a wide-angle or fish-eye lens suitable to provide peripheral images, as described in U.S. patent application No. 15/281,780, and U.S. patent application No. 13/090,127, filed on April 19, 2011 for REAR VIEW MIRROR SIMULATION, now U.S. patent No. 9,238,434, a Fresnel lens or micro lenses as described in German patent application No. 102011053999, filed September 28, 2011 for DETECTION SYSTEM FOR OPTICAL DETECTION OF OBJECT AND/OR REGION OF SPACE FOR DRIVER ASSISTANCE AND/OR DISPLAY SYSTEMS OF MOTOR VEHICLE, HAS OPTICAL SENSOR ARRANGED AS LIGHT FIELD SENSOR FOR DETECTION, and a TIR (total internal reflection) lens as described in U.S. patent No. 8,740,427, filed September 8, 2010 for OPTIMAL LIGHT COUPLING FOR REAR VIEW DEVICES. Another type of optical elements know to be used in camera modules are optical fibers, especially in form of fiber bundles and preferably in form of fiber bundles having an optical head, as described for example in U.S. patent application No. 09/771,140. Different methods can be used to produce such optical elements, for example as described in U.S. patent 8,460,060, filed on January 30, 2009 for METHOD FOR CREATING A COMPLEX SURFACE ON A SUBSTRATE OF GLASS.

The optical elements can be transparent as described for example in U.S. patent No. 8,031,224, German patent application No. 102016108247.3, and U.S. patent application No. 13/242,829, filed September 23, 2011 for CAMERA ARRANGEMENT AND DOOR HANDLE FOR MOTOR VEHICLE.

But the optical elements can also be semitransparent, as described in U.S. patent application No. 09/771,140 and U.S. patent application No. 13/090,127. Still further, the optical elements can be completely or partially coated with different type of coatings to realize different effects, such as for example anti-reflective coatings as described in U.S. patent No. 8,031,224, chromium-based reflective coatings as described in U.S. patent No. 9,181,616, filed on January 24, 2012 for CHROMIUM-BASED REFLECTIVE COATING, and other coatings, for example for polymeric substrates as described in U.S. patent application No. 14/936,024, filed on Nov. 9, 2015 for COATED POLYMERIC SUBSTRATES and in U.S. patent application No. 15/124,310, filed on Feb. 20, 2015 for DECORATIVE COATINGS FOR PLASTIC SUBSTRATES. Preferably the optical elements are made of a scratch-proof material as described for example in German patent application No. 102016108247.3. The optical elements can have uncoupling structures at certain locations of the optical elements, and an optical film, for example an extrusion film, and a molded coating can be applied as described in German patent application No. 102011103200. A coating to spectrally and stress control is described in U.S. patent application No. 15/124,310, which is hereby incorporated herein by reference. Different filters can be integrated into the optical elements such as for example gray filters or polarization filters, described in U.S. patent application No. 14/809,509, filed July 27, 2015 for APPARATUS FOR LIGHT INTENSITY ADJUSTMENT.

Electrochromic substrates, polymer electrolytes and other charge conducting medias may be used for the optical elements based on the descriptions of European patent application No. 08103179.1, filed on March 31, 2008 for PROCESS FOR PRODUCING ELECTROCHROMIC SUBSTRATES AND ELECTROCHROMIC ARTICLES MADE THEREFROM, European patent No. 2202826, filed on December 23, 2008 for POLYMER ELECTROLYTES AND DEVICES CONTAINING, U.S. patent No. 7,999,992, filed on January 7, 2005 for CHARGE CONDUCTING MEDIUM_and U.S. patent No. 8,537,451, filed on March 26, 2008 for PROCESSES FOR PRODUCING ELECTROCHROMIC SUBSTRATES AND ELECTROCHROMIC ARTICLES MADE THEREFROM.

The camera module can also be equipped with apparatuses for light intensity adjustment as described for example in U.S. patent application No. 14/809,509 and light level intensifier tubes as described in U.S. patent application No. 09/771,140, which are all hereby incorporated herein by reference. The electrochromic substrates and devices used in European patent application No. 08103179.1, European patent No. 2202826, U.S. patent No. 7,999,992 and U.S. patent No. 8,537,451, can also be used for this purpose as well as a transflector to transmit or reflect light based on a corresponding input signal, as described in German patent application No. 102016106126.3, filed on April 4, 2016 for IMAGING SYSTEM.

The camera module or a cover adapted to the camera module can be moved using different actuators, drives and/or a flexible track, as for example described in German application No. 102016108247.3 and U.S. patent application No. 15/281,780.

Still further, the camera module can also include cleaning elements to clean the optical element facing outwards and being exposed to the environment. The cleaning element can for example include wipers, brushes, lips, nozzles, fans and similar elements as are described in European patent application No. 14165197.6, filed April 17, 2014 for OPTICAL SYSTEM FOR A VEHICLE, CLEANING DEVICE AND VEHICLE COMPRISING AN OPTICAL SYSTEM, U.S. patent application No. 15/281,780, German patent application No. 102016108247.3, European patent application No. 13163677.1, filed April 15, 2013 for LENS WIPER, European patent application No. 15173201.3, filed June 22, 2015 for LENS CLEANING WITH FLEXIBLE ACTUATOR and European patent No. 1673260, filed on October 14, 2003 for CLEANING DEVICE. The cleaning devices are not limited in composition, and may for example include any fabric, elastomeric, sponge, brush, or combination of these. Special wiper elements including wiper arms, wiper blades, wiping cloth, wiping tissue and combinations thereof are described in European patent application No. 14165197.6. A wiper element may for example be controlled according to the method described in European patent application No. 130164250.6, filed April 18, 2013 for METHOD FOR CONTROLLING A WIPER DEVICE. A reservoir for holding a cleaning liquid as described in European patent application No. 14165197.6. Such a reservoir can be attached to or integrated into the camera module to provide the cleaning liquid to the optical elements of the camera module.

Different methods may be used to detect dirt or other obscurations preventing or reducing the functioning of the camera module, such as described in U.S. patent No. 8,395,514, filed on June 24, 2008 for OPTICAL SYSTEM AND METHOD FOR DETECTING OPTICAL SYSTEM OBSCURATION IN A VEHICLE, European patent No. 1328141, filed on January 12, for ASSEMBLY HAVING A CONDUCTOR FROM FLEXIBLE MATERIAL AND METHOD FOR MANUFACTURING SUCH AN ASSEMBLY, and U.S. patent No. 8,031,224.

Also light sources can be installed or integrated into the camera module to increase the visibility of surrounding objects, measure distances and directions and detect dirt, such as described in U.S. patent No. 8,031,224, U.S. patent application No. 62/470,658, filed on March 13, 2017, 2016 for LIGHT EMITTING MIRROR BEZEL and U.S. patent application No. 09/771/140.

Different heating means, like heating coils, heating devices integrated into the lens holder or the bezel, or other heating elements can be used to impede condensation and icing at the surface of optical elements, as for example described in German patent application No. 102016108247.3, U.S. patent application No. 62/470,658, and German patent application No. 102016107545.0, filed on April 22, 2016 for HEATING DEVICE FOR A CAMERA LENS.

A watertight seal against weather effects, as well as against the influence of washing processes with detergents, solvents and high pressure cleaners can be used on the housing of the camera module as described in U.S. patent application No. 13/090,127.

In another example, the housing can be made of a body including plastic and conductive material, wherein the conductive material is dispersed in the plastic material to form a conductive mass to allow a power source, preferably a DC voltage source, to connect via at least two electrodes to the body and heat the body accordingly, as described in German patent application No. 102016107545.0.

A conductor track can be embedded within plastic parts of the camera module as described in European patent No. 1328141 and U.S. patent No. 7,083,311, filed on January 12, 2002 for CONDUCTOR OF FLEXIBLE MATERIAL, COMPONENT COMPRISING SUCH FLEXIBLE CONDUCTOR, AND METHOD OF MANUFACTURING SUCH CONDUCTOR.

The camera module can include a power harvesting system as described for example in European patent application No. 09171683.7, filed on Sept. 29, 2009 for SELF SUSTAINING REAR VIEW MIRROR.

A fault detection system for electric consumers as described in U.S. patent No. 8,487,633 filed on January 14, 2010 for FAULT DETECTION OF ELECTRIC CONSUMERS IN MOTOR VEHICLES, can be used to detect failure of the camera module.

Different types of fixings can be used to fix the camera module to the vehicle or other components, such as for example the snap-fit connection described in European patent No. 2233360, filed on March 27, 2009 for SNAP FIT CONNECTION IN A REAR VIEW MIRROR.

Different control means and analyzing devices can be used, such as the computation units described in U.S. patent application No. 13/090,127, German patent application No. 102016106126.3, German patent application No. 102011053999, European patent No. 2146325, filed on July 16, for Recording Device for Receiving, Processing and Storing Image Files in a Vehicle and Method, and U.S. patent No. 8,849,104, filed on July 16, 2008 for RECORDING DEVICE AND METHOD FOR CAPTURING AND PROCESSING IMAGE DATA IN A VEHICLE. In addition, HDR (high dynamical range) technology can be used according to U.S. patent application No. 14/830,406, filed on Aug. 19, 2015 for REAR VIEW DEVICE FOR A MOTOR and published as US 20150358590.

### Reference Signs

- 10, 10": first mirror sub assembly
- 11: second mirror sub assembly
- 13: third mirror sub assembly
- 20, 20', 20": lower casing element
- 21": attachment hole
- 23, 23': clip element
- 24: clip element
- 25: drain hole
- 26, 26': drain hole
- 27: locking bracket
- 28: rim
- 29: extension
- 30, 30', 30": articulation assembly
- 31: shaft
- 32": motor
- 33": motor clamp
- 40, 40": attachment means
- 41, 41', 41": cradle
- 42, 42": opening
- 43': hook
- 44: lower cradle
- 45: extension
- 46: seat
- 50, 50', 50": bezel assembly
- 51, 51": tab
- 52: axle
- 53, 53', 53": clip element
- 54, 54": clip element
- 55, 55": locking projection
- 56: abutment projection
- 57: stop shoulder
- 58': ledge
- 59a": projection
- 59b": projection
- 60, 60': upper casing element
- 61, 61': hoop clips
- 70, 70': head assembly
- 71": mirror head
- 72": mirror foot
- 80, 80': latch connection
- 90": turn signal indicator module
- 91": light window
- 92": housing
- 93": clip element
- 94": clip element
- 95": clip element
- 96": nose
- 97": shoulder
- 98": projection
- 100": Bluetooth module
- 800: mirror glass
- 801: mirror bezel
- 802: blind spot monitor
- 803: side turn indicator
- 804: BSM-SDI module
- 805: connecting rib
- 910: lower casing
- 910b: tab receiving portion
- 910c: vertical control tabs
- 918: turn signal indicator module
- 918a: STI tab
- 918b: STI clip

## Claims

1. An assembly, in particular comprising a head assembly (70, 70'), for an external rear vision device to be attached to a motor vehicle, said assembly comprising a lower casing element (20, 20', 20", 910), an upper casing element (60, 60'), an articulation assembly (30, 30', 30") and a bezel assembly (50, 50', 50", 801) for carrying at least one rear vision element, the assembly comprising
a hinge connection between the bezel assembly (50, 50', 50", 801) and a first sub assembly (10, 10") provided by at least the lower casing (20, 20', 20", 910), the articulation assembly (30, 30', 30") and attachment means (40, 40', 40"), with the articulation assembly (30") being mounted on the attachment means (40") or the attachment means (40, 40') being mounted on the articulation assembly (30, 30'), and
at least one snap, latch and/or clip connection between the bezel assembly (50, 50', 50", 801) and the first sub assembly (10, 10") to provide a second sub assembly (11).

2. The assembly of claim 1, **characterized by**
at least one snap, latch and/or clip connection between the bezel assembly (50, 50', 801) and the upper casing element (60, 60')
and/or
between the upper casing element (60, 60') and the attachment means (40) and
between the upper casing element (60, 60') and the lower casing element (20, 20', 910) to provide a third sub assembly in form of the head assembly (70).

3. The assembly of claim 1 or 2, **characterized in that**
the hinge connection is provided between one end of the bezel assembly (50, 50", 801) and a cradle (41, 41") of the attachment means (40, 40") and allows for a rotation of the bezel assembly (50, 50", 801),
preferably between an upper end of the bezel assembly (50, 50", 801) and an upper end of the cradle (41) to allow for a downward rotation of the bezel assembly (50, 50", 801) to attach the bezel assembly (50, 50", 801) to the lower casing (20, 20', 20", 910) via the at least one snap, latch and/or clip connection.

4. The assembly of any one of the preceeding claims, **characterized in that** the hinge connection is provided by
• at least one opening (42, 42") and/or slot, in particular 4 openings and/or slots, with preferably each pair of one opening and one slot having a narrow key way cross section, and
• an axle (52), hook and/or a tab (51, 51") suited to be inserted into the opening (42, 42") and/or slot,
wherein preferably the opening (42, 42") and/or slot is provided by the cradle (41, 41") such that the axle (52) and/or tab (51, 51") of the bezel assembly (50, 50") can be inserted from above into the opening (42, 42") and/or slot.

5. The assembly of any one of the preceding claims, **characterized by**
a first snap, latch and/or clip connection between the bezel assembly (50, 50', 50"), preferably the lower end of the bezel assembly (50, 50', 50"), and the lower casing element (20, 20'), and/or
a second snap, latch and/or clip connection between the bezel assembly (50, 50'), preferably the lower end of the bezel assembly (50, 50'), and a lower cradle (44) of the attachment means (40), and/or
a third snap, latch and/or clip connection between the bezel assembly (50, 50'), preferably the lower end of the bezel assembly (50, 50'), and a lower cradle (44) of the attachment means (40) as well as the lower casing element (20, 20'), and/or
a forth snap, latch and/or clip connection between the bezel assembly (50, 50'), preferably the upper end of the bezel assembly (50, 50'), and the upper casing element (60, 60'), and/or
a fifth snap, latch and/or clip connection between the attachment means, preferably an upper cradle (41') of the attachment means (40'), and the upper casing element (60, 60'), and/or
a sixth snap, latch and/or clip connection (80, 80') between the lower casing element (20, 20') and the upper casing element (60, 60'), and/or
a seventh snap, latch and/or clip connection between a light module, in particular a turn signal indicator module (90", 803) and/or a blind spot monitor module (802), and the lower casing element (20") and/or the upper casing element, and/or
an eighth snap, latch and/or clip connection between a Bluetooth module (100") and the light module, the lower casing element and/or the upper casing element.

6. The assembly of any one of the preceding claims, **characterized in that**
the lower casing element (20, 20', 20") is provided with at least one hole (25, 26, 26', 21") functioning as a drain hole and/or enabling relieving the first, third, sixth, seventh and/or eighth snap, latch and/or clip connection.

7. The assembly of any one of the preceding claims, **characterized by**
a button and/or functional module, comprising a light module (918), in particular a turn signal indicator module (90", 803) and/or a blind spot monitor module (802), a camera module, a Bluetooth module and/or a sensor module, in particular a temperature sensor (90'), preferably moveably insertable in the hole (26').

8. The assembly of claim 7, **characterized in that**
the turn signal indicator module (803) and the blind spot monitor module (802) are formed as a single unit immovably attached to each other in form of a combined module (804) and share at least one of a light source or a printed circuit board.

9. The assembly of claim 5 and any one of the claims 6 to 8, **characterized in that**
the first, third, sixth, seventh and/or eighth snap, latch and/or clip connection comprises at least one element (23, 23', 24, 27) in the region of a rim (28) of the lower casing element (20, 20') and/or integrally formed with the lower casing element (20, 20'), and/or
the first, second, third and/or forth snap, latch and/or clip connection comprises at least one element (51, 53, 53', 53", 54, 54", 55, 55", 56, 57) integrally formed with the bezel assembly (50, 50', 50").

10. The assembly of claim 7 and any one of the claims 5 to 6 or 8 to 9, **characterized in that** attachment of the bezel assembly (50") to the lower casing (20") is fixing the button and/or the functional module within the assembly and/or closing a gap between the upper and/or lower casing (20") on the one side and the bezel assembly (50") on the other side, and/or
at least one clip element (53', 53"), preferably of the bezel assembly (50', 50"), and/or at least one nose, shoulder or projection (96", 97") of the button and/or the functional module is suited for fixing the button and/or the functional module.

11. The assembly of claim 10, **characterized in that**
the light module, preferably the turn signal indicator module (90"), is provided with at least one, preferably arc shaped, first nose or projection (96") engaging, a preferably U shaped recess of, a projection (59"b) of the bezel assembly (50"), and/or
the light module, preferably the turn signal indicator module (90"), is provided with at least one second nose, shoulder or projection (97") engaging a further projection (59"a) of the bezel assembly (50").

12. The assembly of claim 7 and any one of the claims 5 to 6 or 8 to 10, **characterized in that**
the light module (918) comprises one or more tabs (918a) and one or more clips (918b), the lower casing element (910) comprises one or more tab receiving portions (910b), and
the one or more tab receiving portions (910b) of the lower casing element (910) are configured to receive the one or more tabs of (918a) the light module (918),

13. The assembly of claim 7 and any one of the claims 5 to 6 or 8 to 10, **characterized in that**
the light module (918) is configured to lock and attach to the lower casing element (910) by pressing the light module (918) on the lower casing element (910) and sliding the light module (918) with respect to the lower casing element (910), with preferably the light module (918) sliding along a curved edge of the lower casing element (910) until one or more retaining clips (918b) are engaged, and/or preferably the light module (918) being locked in position via a series of vertical control tabs (910c) along the lower casing element (910).

14. The assembly of claim 5 and any one of the claims 6 to 13, **characterized in that**
the third snap, latch and/or clip connection is provided by at least one element (45) integrally formed with the lower cradle (44), and/or
the bezel assembly (50, 50") is provided with at least one first projection (55) suited for extending through a bracket (27) of the lower casing element (20) and engaging the lower cradle (44), and/or
the bezel assembly (50) is provided with at least one second projection (56) suited for being inserted into a recess provided by the lower casing element (20), and/or
the bezel assembly (50) is provided with at least one shoulder (57) suited to act as a stop element, preferably by abutting against the rim (28) of the lower casing element (20), and/or
the lower casing element (20) is provided with an extension (29) suited for engaging the lower cradle (44), preferably for resting in a seat (46) provided by the lower cradle (44) when the second or third sub assembly (11) is assembled.

15. The assembly of claim 14, **characterized in that**
the first projection (55), the second projection (56) and the shoulder (57) are provided by a datum of the bezel assembly (50).

16. The assembly of claim 5 and any one of the claims 6 to 15, **characterized in that**
the forth snap, latch and/or clip connection is provided by at least one hoop clip (61, 61') of the upper casing element (60, 60') into which the tab (51) of the bezel assembly (50) and/or at least one hook (43') of the upper cradle (41') can be inserted.

17. The assembly of claim 16, **characterized in that**
the fifth snap, latch and/or clip connection is provided by at least one projection or ledge (58') of the bezel assembly (50') suited to engage the at least one hoop clip (61, 61 ') of the upper casing element (60, 60').

18. The assembly of any one of the preceding claims, **characterized by** a spring element acting on the bezel assembly (50').

19. A method for assembling the assembly (70, 70') according to any one of the preceding claims, comprising the steps of:
providing the first sub assembly (10, 10"), preferably with the turn signal indicator module (90") attached to the lower casing (20"),
hinging the upper end of the bezel assembly (50, 50', 50") into the first sub assembly (10, 10"), preferably via the cradle (41") or upper cradle (41, 41'),
rotating the lower end of the bezel assembly (50, 50', 50") downwardly, in particular against the force of the spring element, and
clipping the lower end of the bezel assembly (50, 50', 50") at least to the lower casing element (20, 20', 20") to form the second sub assembly (11).

20. The method for assembling the assembly according to claim 19, further comprising the step of
clipping the upper casing element (60, 60') onto the second sub assembly (11), in particular onto the bezel assembly (50, 50', 50") and/or the cradle (41") or upper cradle (41, 41') and the lower casing element (20, 20', 20").

21. A method for dissembling the assembly (70, 70') according to any one of the claims 1 to 18, comprising the steps of:
relieving the connection between the lower end of the bezel assembly (50, 50', 50") and
the lower casing element (20, 20', 20"), in particular the bezel assembly (50, 50'), the lower casing element (20, 20') and the lower cradle (44), through the hole (25, 26) and/or via the button and/or via the functional module within the lower casing element (20, 20'), and
rotating the lower end of the bezel assembly (50, 50', 50"), in particular via the force of the spring element, upwardly and hereby releasing the upper casing element (60, 60').

22. The method for dissembling the assembly according to claim 21, further comprising the step of
drawing the bezel assembly (50, 50', 50") out of the hinge connection with the cradle (41") or upper cradle (41, 41').

23. A rear vision device with an assembly of one of the claims 1 to 18, wherein at least one rear vision element is attached to the bezel assembly (50, 50', 50", 801), with the rear vision element comprising a reflective element (800) and/or a camera and the articulation assembly (30, 30', 30") is suited to move at least the at least one rear vision element.

24. A motor vehicle with at least one rear vision device of claim 23, wherein at least the cradle (41") or upper cradle (41, 41') is moveably attached to the motor vehicle via a foot assembly fixed to the motor vehicle.

## Patentansprüche

1. Baugruppe, die insbesondere eine Kopfbaugruppe (70, 70') umfasst, für eine externe Rücksichtvorrichtung, die an einem Kraftfahrzeug zu befestigen ist, wobei die Baugruppe ein unteres Gehäuseelement (20, 20', 20", 910), ein oberes Gehäuseelement (60, 60'), eine Gelenkbaugruppe (30, 30', 30") und eine Einfassungsbaugruppe (50, 50', 50", 801) zum Tragen wenigstens eines Rücksichtelements umfasst, wobei die Baugruppe umfasst:
eine Scharnierverbindung zwischen der Einfassungsbaugruppe (50, 50', 50", 801) und einer ersten Unterbaugruppe (10, 10"), die durch wenigstens das untere Gehäuse (20, 20', 20", 910), die Gelenkbaugruppe (30, 30', 30") und Befestigungsmittel (40, 40', 40") bereitgestellt wird, wobei die Gelenkbaugruppe (30") an den Befestigungsmitteln (40") angebracht ist oder die Befestigungsmittel (40, 40') an der Gelenkbaugruppe (30, 30') angebracht sind, und
wenigstens eine Schnapp-, Rast- und/oder Klipsverbindung zwischen der Einfassungsbaugruppe (50, 50', 50", 801) und der ersten Unterbaugruppe (10, 10"), um eine zweite Unterbaugruppe (11) bereitzustellen.

2. Baugruppe nach Anspruch 1, **gekennzeichnet durch**
wenigstens eine Schnapp-, Rast- und/oder Klipsverbindung zwischen der Einfassungsbaugruppe (50, 50', 801) und dem oberen Gehäuseelement (60, 60') und/oder
zwischen dem oberen Gehäuseelement (60, 60') und den Befestigungsmitteln (40) und zwischen dem oberen Gehäuseelement (60, 60') und dem unteren Gehäuseelement (20, 20', 910),
um eine dritte Unterbaugruppe in Form der Kopfbaugruppe (70) bereitzustellen.

3. Baugruppe nach Anspruch 1 oder 2, **dadurch gekennzeichnet, dass**
die Scharnierverbindung zwischen einem Ende der Einfassungsbaugruppe (50, 50", 801) und einem Träger (41, 41") der Befestigungsmittel (40, 40") bereitgestellt ist und eine Drehung der Einfassungsbaugruppe (50, 50", 801) ermöglicht,
vorzugsweise zwischen einem oberen Ende der Einfassungsbaugruppe (50, 50", 801) und einem oberen Ende des Trägers (41), um eine nach unten gerichtete Drehung der Einfassungsbaugruppe (50, 50", 801) zu ermöglichen, um die Einfassungsbaugruppe (50, 50", 801) über die wenigstens eine Schnapp-, Rast- und/oder Klipsverbindung an dem unteren Gehäuse (20, 20', 20", 910) zu befestigen.

4. Baugruppe nach einem der vorangehenden Ansprüche, **dadurch gekennzeichnet, dass** die Scharnierverbindung bereitgestellt wird durch
• wenigstens eine Öffnung (42, 42") und/oder einen Schlitz, insbesondere 4 Öffnungen und/oder Schlitze, wobei vorzugsweise jedes Paar aus einer Öffnung und einem Schlitz einen schmalen Keilnutquerschnitt aufweist, und
• eine Achse (52), einen Haken und/oder eine Zunge (51, 51"), die/der dazu geeignet ist, in die Öffnung (42, 42") und/oder den Schlitz eingeführt zu werden,
wobei vorzugsweise die Öffnung (42, 42") und/oder der Schlitz durch den Träger (41, 41") derart bereitgestellt wird, dass die Achse (52) und/oder die Zunge (51, 51") der Einfassungsbaugruppe (50, 50") von oben in die Öffnung (42, 42") und/oder den Schlitz eingeführt werden kann.

5. Baugruppe nach einem der vorangehenden Ansprüche, **gekennzeichnet durch**
eine erste Schnapp-, Rast- und/oder Klipsverbindung zwischen der Einfassungsbaugruppe (50, 50', 50"), vorzugsweise dem unteren Ende der Einfassungsbaugruppe (50, 50', 50"), und dem unteren Gehäuseelement (20, 20') und/oder
eine zweite Schnapp-, Rast- und/oder Klipsverbindung zwischen der Einfassungsbaugruppe (50, 50'), vorzugsweise dem unteren Ende der Einfassungsbaugruppe (50, 50'), und einem unteren Träger (44) der Befestigungsmittel (40) und/oder
eine dritte Schnapp-, Rast- und/oder Klipsverbindung zwischen der Einfassungsbaugruppe (50, 50'), vorzugsweise dem unteren Ende der Einfassungsbaugruppe (50, 50'), und einem unteren Träger (44) der Befestigungsmittel (40) sowie dem unteren Gehäuseelement (20, 20') und/oder
eine vierte Schnapp-, Rast- und/oder Klipsverbindung zwischen der Einfassungsbaugruppe (50, 50'), vorzugsweise dem oberen Ende der Einfassungsbaugruppe (50, 50'), und dem oberen Gehäuseelement (60, 60') und/oder
eine fünfte Schnapp-, Rast- und/oder Klipsverbindung zwischen den Befestigungsmitteln, vorzugsweise einem oberen Träger (41') der Befestigungsmittel (40'), und dem oberen Gehäuseelement (60, 60') und/oder
eine sechste Schnapp-, Rast- und/oder Klipsverbindung (80, 80') zwischen dem unteren Gehäuseelement (20, 20') und dem oberen Gehäuseelement (60, 60') und/oder eine siebte Schnapp-, Rast- und/oder Klipsverbindung zwischen einem Lichtmodul, insbesondere einem Fahrtrichtungsanzeigemodul (90", 803) und/oder einem Totwinkelmonitormodul (802), und dem unteren Gehäuseelement (20") und/oder dem oberen Gehäuseelement und/oder
eine achte Schnapp-, Rast- und/oder Klipsverbindung zwischen einem Bluetooth-Modul (100") und dem Lichtmodul, dem unteren Gehäuseelement und/oder dem oberen Gehäuseelement.

6. Baugruppe nach einem der vorangehenden Ansprüche, **dadurch gekennzeichnet, dass** das untere Gehäuseelement (20, 20', 20") mit wenigstens einem Loch (25, 26, 26', 21") versehen ist, das als ein Abzugsloch funktioniert und/oder ein Lösen der ersten, dritten, sechsten, siebten und/oder achten Schnapp-, Rast- und/oder Klipsverbindung ermöglicht.

7. Baugruppe nach einem der vorangehenden Ansprüche, **gekennzeichnet durch**
einen Knopf und/oder ein Funktionsmodul, das ein Lichtmodul (918), insbesondere ein Fahrtrichtungsanzeigemodul (90", 803) und/oder ein Totwinkelmonitormodul (802), ein Kameramodul, ein Bluetooth-Modul und/oder ein Sensormodul, insbesondere einen Temperatursensor (90'), umfasst und vorzugsweise bewegbar in das Loch (26') einführbar ist.

8. Baugruppe nach Anspruch 7, **dadurch gekennzeichnet, dass**
das Fahrtrichtungsanzeigemodul (803) und das Totwinkelmonitormodul (802) als eine einzige Einheit ausgebildet sind, die unbewegbar in Form eines kombinierten Moduls (804) aneinander befestigt sind und sich eine Lichtquelle und/oder eine Leiterplatte teilen.

9. Baugruppe nach Anspruch 5 und einem der Ansprüche 6 bis 8, **dadurch gekennzeichnet, dass**
die erste, dritte, sechste, siebte und/oder achte Schnapp-, Rast- und/oder Klipsverbindung wenigstens ein Element (23, 23', 24, 27) im Bereich eines Randes (28) des unteren Gehäuseelements (20, 20') umfasst und/oder integral mit dem unteren Gehäuseelement (20, 20') ausgebildet ist und/oder
die erste, zweite, dritte und/oder vierte Schnapp-, Rast- und/oder Klipsverbindung wenigstens ein Element (51, 53, 53', 53", 54, 54", 55, 55", 56, 57) umfasst, das integral mit der Einfassungsbaugruppe (50, 50', 50") ausgebildet ist.

10. Baugruppe nach Anspruch 7 und einem der Ansprüche 5 bis 6 oder 8 bis 9, **dadurch gekennzeichnet, dass**
die Befestigung der Einfassungsbaugruppe (50") an dem unteren Gehäuse (20") den Knopf und/oder des Funktionsmoduls innerhalb der Baugruppe fixiert und/oder einen Spalt zwischen dem oberen und/oder unteren Gehäuse (20") auf der einen Seite und der Einfassungsbaugruppe (50") auf der anderen Seite schließt und/oder
wenigstens ein Klipselement (53', 53"), vorzugsweise der Einfassungsbaugruppe (50', 50"), und/oder wenigstens eine Nase, eine Schulter oder ein Vorsprung (96", 97") des Knopfes und/oder des Funktionsmoduls zum Befestigen des Knopfes und/oder des Funktionsmoduls geeignet ist.

11. Baugruppe nach Anspruch 10, **dadurch gekennzeichnet, dass**
das Lichtmodul, vorzugsweise das Fahrtrichtungsanzeigemodul (90"), mit wenigstens einer/m, vorzugsweise bogenförmigen, ersten Nase oder Vorsprung (96") versehen ist, die/der mit einem Vorsprung (59"b) der Einfassungsbaugruppe (50"), vorzugsweise mit einer U-förmigen Aussparung desselben, in Eingriff steht, und/oder
das Lichtmodul, vorzugsweise das Fahrtrichtungsanzeigemodul (90"), mit wenigstens einer/m zweiten Nase, Ansatz oder Vorsprung (97") versehen ist, die/der mit einem weiteren Vorsprung (59"a) der Einfassungsbaugruppe (50") in Eingriff steht.

12. Baugruppe nach Anspruch 7 und einem der Ansprüche 5 bis 6 oder 8 bis 10, **dadurch gekennzeichnet, dass**
das Lichtmodul (918) eine oder mehrere Zungen (918a) und einen oder mehrere Klipse (918b) umfasst,
das untere Gehäuseelement (910) einen oder mehrere Zungenaufnahmeabschnitte (910b) umfasst und
der eine oder die mehreren Zungenaufnahmeabschnitte (910b) des unteren Gehäuseelements (910) dazu ausgestaltet sind, die eine oder mehreren Zungen (918a) des Lichtmoduls (918) aufzunehmen.

13. Baugruppe nach Anspruch 7 und einem der Ansprüche 5 bis 6 oder 8 bis 10, **dadurch gekennzeichnet, dass**
das Lichtmodul (918) dazu ausgestaltet ist, sich durch Drücken des Lichtmoduls (918) auf das untere Gehäuseelement (910) und Verschieben des Lichtmoduls (918) bezogen auf das untere Gehäuseelement (910) mit dem unteren Gehäuseelement (910) zu verriegeln und daran befestigt zu werden, wobei vorzugsweise das Lichtmodul (918) einen gebogenen Rand des unteren Gehäuseelements (910) entlang gleitet, bis ein oder mehrere Halteklipse (918b) in Eingriff stehen, und/oder vorzugsweise das Lichtmodul (918) über eine Reihe vertikaler Steuerzungen (910c) entlang des unteren Gehäuseelements (910) in seiner Position verriegelt ist.

14. Baugruppe nach Anspruch 5 und einem der Ansprüche 6 bis 13, **dadurch gekennzeichnet, dass**
die dritte Schnapp-, Rast- und/oder Klipsverbindung durch wenigstens ein Element (45) bereitgestellt wird, das integral mit dem unteren Träger (44) ausgebildet ist, und/oder
die Einfassungsbaugruppe (50, 50") mit wenigstens einem ersten Vorsprung (55) versehen ist, der dazu geeignet ist, sich durch eine Halterung (27) des unteren Gehäuseelements (20) hindurch zu erstrecken und mit dem unteren Träger (44) in Eingriff zu stehen, und/oder
die Einfassungsbaugruppe (50) mit wenigstens einem zweiten Vorsprung (56) versehen ist, der dazu geeignet ist, in eine Aussparung, die durch das untere Gehäuseelement (20) bereitgestellt wird, eingeführt zu werden, und/oder
die Einfassungsbaugruppe (50) mit wenigstens einer Schulter (57) versehen ist, die dazu geeignet ist, als ein Anschlagelement zu fungieren, vorzugsweise durch Anliegen an dem Rand (28) des unteren Gehäuseelements (20), und/oder
das untere Gehäuseelement (20) mit einer Verlängerung (29) versehen ist, die dazu geeignet ist, mit dem unteren Träger (44) in Eingriff zu stehen, vorzugsweise dazu, in einer Aufnahme (46), die durch den unteren Träger (44) bereitgestellt wird, zu liegen, wenn die zweite oder dritte Unterbaugruppe (11) zusammengebaut ist.

15. Baugruppe nach Anspruch 14, **dadurch gekennzeichnet, dass**
der erste Vorsprung (55), der zweite Vorsprung (56) und die Schulter (57) durch ein Merkmal der Einfassungsbaugruppe (50) bereitgestellt werden.

16. Baugruppe nach Anspruch 5 und einem der Ansprüche 6 bis 15, **dadurch gekennzeichnet, dass**
die vierte Schnapp-, Rast- und/oder Klipsverbindung durch wenigstens einen Rahmenklips (61, 61') des oberen Gehäuseelements (60, 60') bereitgestellt wird, in den die Zunge (51) der Einfassungsbaugruppe (50) und/oder wenigstens ein Haken (43') des oberen Trägers (41') eingeführt werden kann.

17. Baugruppe nach Anspruch 16, **dadurch gekennzeichnet, dass**
die fünfte Schnapp-, Rast- und/oder Klipsverbindung durch wenigstens einen Vorsprung oder eine Leiste (58') der Einfassungsbaugruppe (50') bereitgestellt wird, der/die dazu geeignet ist, mit dem wenigstens einen Rahmenklips (61, 61') des oberen Gehäuseelements (60, 60') in Eingriff zu stehen.

18. Baugruppe nach einem der vorangehenden Ansprüche, **gekennzeichnet durch** ein Federelement, das auf die Einfassungsbaugruppe (50') einwirkt.

19. Verfahren zum Zusammenbauen der Baugruppe (70, 70') nach einem der vorangehenden Ansprüche, das folgende Schritte umfasst:
Bereitstellen der ersten Unterbaugruppe (10, 10"), vorzugsweise mit dem an dem unteren Gehäuse (20") befestigten Fahrtrichtungsanzeigemodul (90"),
Anlenken des oberen Endes der Einfassungsbaugruppe (50, 50', 50") an die erste Unterbaugruppe (10, 10"), vorzugsweise über den Träger (41") oder den oberen Träger (41, 41'),
Drehen des unteren Endes der Einfassungsbaugruppe (50, 50', 50") nach unten, insbesondere gegen die Kraft des Federelements, und
Klipsen des unteren Endes der Einfassungsbaugruppe (50, 50', 50") wenigstens an das untere Gehäuseelement (20, 20', 20"), um die zweite Unterbaugruppe (11) auszubilden.

20. Verfahren zum Zusammenbauen der Baugruppe nach Anspruch 19, das ferner folgenden Schritt umfasst:
Klipsen des oberen Gehäuseelements (60, 60') auf die zweite Unterbaugruppe (11), insbesondere auf die Einfassungsbaugruppe (50, 50', 50") und/oder den Träger (41") oder den oberen Träger (41, 41') und das untere Gehäuseelement (20, 20', 20").

21. Verfahren zum Auseinanderbauen der Baugruppe (70, 70') nach einem der Ansprüche 1 bis 18, das folgende Schritte umfasst:
Lösen der Verbindung zwischen dem unteren Ende der Einfassungsbaugruppe (50, 50', 50") und dem unteren Gehäuseelement (20, 20', 20"), insbesondere der Einfassungsbaugruppe (50, 50'), dem unteren Gehäuseelement (20, 20') und dem unteren Träger (44), durch das Loch (25, 26) hindurch und/oder über den Knopf und/oder über das Funktionsmodul innerhalb des unteren Gehäuseelements (20, 20') und
Drehen des unteren Endes der Einfassungsbaugruppe (50, 50', 50"), insbesondere über die Kraft des Federelements, nach oben und dadurch Freigeben des oberen Gehäuseelements (60, 60').

22. Verfahren zum Auseinanderbauen der Baugruppe nach Anspruch 21, das ferner folgenden Schritt umfasst:
Herausziehen der Einfassungsbaugruppe (50, 50', 50") aus der Scharnierverbindung mit dem Träger (41') oder dem oberen Träger (41, 41').

23. Rücksichtvorrichtung mit einer Baugruppe nach einem der Ansprüche 1 bis 18, wobei wenigstens ein Rücksichtelement an der Einfassungsbaugruppe (50, 50', 50", 801) befestigt ist, wobei das Rücksichtelement ein reflektierendes Element (800) und/oder eine Kamera umfasst und die Gelenkbaugruppe (30, 30', 30") dazu geeignet ist, wenigstens das wenigstens eine Rücksichtelement zu bewegen.

24. Kraftfahrzeug mit wenigstens einer Rücksichtvorrichtung nach Anspruch 23, wobei wenigstens der Träger (41") oder der obere Träger (41, 41') über eine Fußbaugruppe, die an dem Kraftfahrzeug befestigt ist, bewegbar an dem Kraftfahrzeug befestigt ist.

## Revendications

1. Ensemble, en particulier comprenant un ensemble de tête (70, 70'), pour un rétroviseur extérieur à fixer à un véhicule automobile, ledit ensemble comprenant un élément de boîtier inférieur (20, 20', 20", 910), un élément de boîtier supérieur (60, 60'), un ensemble d'articulation (30, 30', 30") et un ensemble de lunette (50, 50', 50", 801) pour porter au moins un élément de rétroviseur, l'ensemble comprenant
une liaison articulée entre l'ensemble de lunette (50, 50', 50", 801) et un premier sous-ensemble (10, 10") fourni par au moins le boîtier inférieur (20, 20', 20", 910), l'ensemble d'articulation (30, 30', 30") et le moyen de fixation (40, 40', 40"), l'ensemble d'articulation (30") étant monté sur le moyen de fixation (40") ou le moyen de fixation (40, 40') étant monté sur l'ensemble d'articulation (30, 30'), et
au moins une liaison par ergot, loquet et/ou clip entre l'ensemble de lunette (50, 50', 50", 801) et le premier sous-ensemble (10, 10") pour fournir un deuxième sous-ensemble (11).

2. Ensemble selon la revendication 1, **caractérisé par**
au moins une liaison par ergot, loquet et/ou clip entre l'ensemble de lunette (50, 50', 801) et l'élément de boîtier supérieur (60, 60') et/ou
entre l'élément de boîtier supérieur (60, 60') et le moyen de fixation (40) et
entre l'élément de boîtier supérieur (60, 60') et l'élément de boîtier inférieur (20, 20', 910)
pour fournir un troisième sous-ensemble sous la forme de l'ensemble de tête (70).

3. Ensemble selon la revendication 1 ou 2, **caractérisé en ce que**
la liaison articulée est fournie entre une extrémité de l'ensemble de lunette (50, 50", 801) et un support (41, 41") du moyen de fixation (40, 40") et permet une rotation de l'ensemble de lunette (50, 50", 801),
de préférence entre une extrémité supérieure de l'ensemble de lunette (50, 50", 801) et une extrémité supérieure du support (41) pour permettre une rotation vers le bas de l'ensemble de lunette (50, 50", 801) afin de fixer l'ensemble de lunette (50, 50", 801) au boîtier inférieur (20, 20', 20", 910) par le biais de l'au moins une liaison par ergot, loquet et/ou clip.

4. Ensemble selon l'une quelconque des revendications précédentes, **caractérisé en ce que** la liaison articulée est fournie par
• au moins une ouverture (42, 42") et/ou fente, en particulier 4 ouvertures et/ou fentes, avec de préférence chaque paire d'une ouverture et d'une fente qui présente une coupe transversale de rainure d'ergot étroite, et
• un axe (52), un crochet et/ou une languette (51, 51") adapté/e à être inséré/e dans l'ouverture (42, 42") et/ou la fente,
dans lequel de préférence l'ouverture (42, 42") et/ou la fente est fournie par le support (41, 41") de telle sorte que l'axe (52) et/ou la languette (51, 51") de l'ensemble de lunette (50, 50") peut être inséré/e dans l'ouverture (42, 42") et/ou la fente depuis le dessus.

5. Ensemble selon l'une quelconque des revendications précédentes, **caractérisé par**
une première liaison par ergot, loquet et/ou clip entre l'ensemble de lunette (50, 50', 50"), de préférence l'extrémité inférieure de l'ensemble de lunette (50, 50', 50"), et l'élément de boîtier inférieur (20, 20'), et/ou
une deuxième liaison par ergot, loquet et/ou clip entre l'ensemble de lunette (50, 50'), de préférence l'extrémité inférieure de l'ensemble de lunette (50, 50'), et un support inférieur (44) du moyen de fixation (40), et/ou
une troisième liaison par ergot, loquet et/ou clip entre l'ensemble de lunette (50, 50'), de préférence l'extrémité inférieure de l'ensemble de lunette (50, 50'), et un support inférieur (44) du moyen de fixation (40) ainsi que l'élément de boîtier inférieur (20, 20'), et/ou
une quatrième liaison par ergot, loquet et/ou clip entre l'ensemble de lunette (50, 50'), de préférence l'extrémité supérieure de l'ensemble de lunette (50, 50'), et l'élément de boîtier supérieur (60, 60'), et/ou
une cinquième liaison par ergot, loquet et/ou clip entre le moyen de fixation, de préférence un support supérieur (41') du moyen de fixation (40), et l'élément de boîtier supérieur (60, 60'), et/ou
une sixième liaison par ergot, loquet et/ou clip (80, 80') entre l'élément de boîtier inférieur (20, 20') et l'élément de boîtier supérieur (60, 60'), et/ou
une septième liaison par ergot, loquet et/ou clip entre un module de témoins lumineux, en particulier un module de clignotants (90", 803) et/ou un module de surveillance d'angle mort (802) et l'élément de boîtier inférieur (20") et/ou l'élément de boîtier supérieur, et/ou
une huitième liaison par ergot, loquet et/ou clip entre un module Bluetooth (100") et le module de témoins lumineux, l'élément de boîtier inférieur et/ou l'élément de boîtier supérieur.

6. Ensemble selon l'une quelconque des revendications précédentes, **caractérisé en ce que**
l'élément de boîtier inférieur (20, 20', 20") est fourni avec au moins un orifice (25, 26, 26', 21") fonctionnant comme un orifice d'évacuation et/ou permettant de dégager la première, troisième, sixième, septième et/ou huitième liaison par ergot, loquet et/ou clip.

7. Ensemble selon l'une quelconque des revendications précédentes, **caractérisé par** un bouton et/ou module fonctionnel, comprenant un module de témoins lumineux (918), en particulier un module de clignotants (90", 803) et/ou un module de surveillance d'angle mort (802), un module de caméra, un module Bluetooth et/ou un module de capteur, en particulier un capteur de température (90), de préférence qui peut être inséré de manière mobile dans l'orifice (26').

8. Ensemble selon la revendication 7, **caractérisé en ce que**
le module de clignotants (803) et le module de surveillance d'angle mort (802) sont formés comme une seule unité, fixés l'un à l'autre de manière fixe sous la forme d'un module combiné (804), et partagent au moins un élément parmi une source lumineuse ou une carte de circuit imprimé.

9. Ensemble selon la revendication 5 et l'une quelconque des revendications 6 à 8, **caractérisé en ce que**
la première, troisième, sixième, septième et/ou huitième liaison par ergot, loquet et/ou clip comprend au moins un élément (23, 23', 24, 27) dans la région d'un bord (28) de l'élément de boîtier inférieur (20, 20') et/ou formé d'un seul tenant avec l'élément de boîtier inférieur (20, 20'), et/ou
la première, seconde, troisième et/ou quatrième liaison par ergot, loquet et/ou clip comprend au moins un élément (51, 53, 53', 53", 54, 54", 55, 55", 56, 57) formé d'un seul tenant avec l'ensemble de lunette (50, 50', 50").

10. Ensemble selon la revendication 7 et l'une quelconque des revendications 5 à 6 ou 8 à 9, **caractérisé en ce que**
la fixation de l'ensemble de lunette (50") au boîtier inférieur (20") fixe le bouton et/ou le module fonctionnel à l'intérieur de l'ensemble et/ou ferme un espace entre le boîtier supérieur et/ou inférieur (20") d'un côté et l'ensemble de lunette (50") de l'autre côté, et/ou
au moins un élément de clip (53', 53"), de préférence de l'ensemble de lunette (50', 50"), et/ou au moins un nez, un épaulement ou une saillie (96", 97") du bouton et/ou du module fonctionnel est adapté(e) à fixer le bouton et/ou le module fonctionnel.

11. Ensemble selon la revendication 10, **caractérisé en ce que**
le module de témoins lumineux, de préférence le module de clignotants (90"), est fourni avec au moins un premier nez ou une première saillie (96") de préférence en forme d'arc s'engageant dans une saillie (59"b) de l'ensemble de lunette (50"), de préférence dans un évidement en forme de U de celle-ci, et/ou
le module de témoins lumineux, de préférence le module de clignotants (90"), est fourni avec au moins un/e second/e nez, épaulement ou saillie (97") s'engageant dans une autre saillie (59"a) de l'ensemble de lunette (50").

12. Ensemble selon la revendication 7 et l'une quelconque des revendications 5 à 6 ou 8 à 10, **caractérisé en ce que**
le module de témoins lumineux (918) comprend une ou plusieurs languettes (918a) et un ou plusieurs clips (918b),
l'élément de boîtier inférieur (910) comprend une ou plusieurs parties de réception de languette (910b), et
l'une ou plusieurs parties de réception de languette (910b) de l'élément de boîtier inférieur (910) sont configurées pour recevoir l'une ou plusieurs languettes (918a) du module de témoins lumineux (918).

13. Ensemble selon la revendication 7 et l'une quelconque des revendications 5 à 6 ou 8 à 10, **caractérisé en ce que**
le module de témoins lumineux (918) est configuré pour se verrouiller et se fixer à l'élément de boîtier inférieur (910) en pressant le module de témoins lumineux (918) sur l'élément de boîtier inférieur (910) et en glissant le module de témoins lumineux (918) par rapport à l'élément de boîtier inférieur (910), avec de préférence le module de témoins lumineux (918) qui glisse le long d'un bord courbé de l'élément de boîtier inférieur (910) jusqu'à ce qu'un ou plusieurs clips de retenue (918b) soient engagés, et/ou de préférence le module de témoins lumineux (918) est verrouillé en position par le biais d'une série de languettes de commande verticales (910c) le long de l'élément de boîtier inférieur (910).

14. Ensemble selon la revendication 5 et l'une quelconque des revendications 6 à 13, **caractérisé en ce que**
la troisième liaison par ergot, loquet et/ou clip est fournie par au moins un élément (45) formé d'un seul tenant avec le support inférieur (44), et/ou
l'ensemble de lunette (50, 50") est fourni avec au moins une première saillie (55) adaptée à s'étendre à travers une patte de fixation (27) de l'élément de boîtier inférieur (20) pour s'engager dans le support inférieur (44), et/ou
l'ensemble de lunette (50) est fourni avec au moins une seconde saillie (56) adaptée à être insérée dans un évidement fourni par l'élément de boîtier inférieur (20), et/ou l'ensemble de lunette (50) est fourni avec au moins un épaulement (57) adapté à agir comme un élément d'arrêt, de préférence en venant en butée contre le bord (28) de l'élément de boîtier inférieur (20), et/ou
l'élément de boîtier inférieur (20) est fourni avec une extension (29) adaptée à s'engager dans le support inférieur (44), de préférence pour reposer dans un siège (46) fourni par le support inférieur (44) lorsque le deuxième ou troisième sous-ensemble (11) est assemblé.

15. Ensemble selon la revendication 14, **caractérisé en ce que**
la première saillie (55), la seconde saillie (56) et l'épaulement (57) sont fournis par un point de repère de l'ensemble de lunette (50).

16. Ensemble selon la revendication 5 et l'une quelconque des revendications 6 à 15, **caractérisé en ce que**
la quatrième liaison par ergot, loquet et/ou clip est fournie par au moins un clip à boucle (61, 61') de l'élément de boîtier supérieur (60, 60') dans lequel une languette (51) de l'ensemble de lunette (50) et/ou au moins un crochet (43') du support supérieur (41') peut être inséré/e.

17. Ensemble selon la revendication 16, **caractérisé en ce que**
la cinquième liaison par ergot, loquet et/ou clip est fournie par au moins une saillie ou un rebord (58') de l'ensemble de lunette (50') adapté/e à s'engager dans l'au moins un clip à boucle (61, 61') de l'élément de boîtier supérieur (60, 60').

18. Ensemble selon l'une quelconque des revendications précédentes, **caractérisé par** un élément à ressort agissant sur l'ensemble de lunette (50').

19. Procédé destiné à assembler l'ensemble (70, 70') selon l'une quelconque des revendications précédentes, comprenant les étapes de :
fourniture du premier sous-ensemble (10, 10"), de préférence avec le module de clignotants (90") fixé au boîtier inférieur (20"),
articulation de l'extrémité supérieure de l'ensemble de lunette (50, 50', 50") dans le premier sous-ensemble (10, 10"), de préférence par le biais du support (41") ou support supérieur (41, 41'),
rotation de l'extrémité inférieure de l'ensemble de lunette (50, 50', 50") vers le bas, en particulier contre la force e l'élément à ressort, et
clippage de l'extrémité inférieure de l'ensemble de lunette (50, 50', 50") au moins à l'élément de boîtier inférieur (20, 20', 20") pour former le deuxième sous-ensemble (11).

20. Procédé destiné à assembler l'ensemble selon la revendication 19, comprenant en outre l'étape de
clippage de l'élément de boîtier supérieur (60, 60') sur le deuxième sous-ensemble (11), en particulier sur l'ensemble de lunette (50, 50', 50") et/ou le support (41") ou support supérieur (41, 41') et l'élément de boîtier inférieur (20, 20', 20").

21. Procédé destiné à démonter l'ensemble (70, 70') selon l'une quelconque des revendications 1 à 18, comprenant les étapes de :
dégagement de la liaison entre l'extrémité inférieure de l'ensemble de lunette (50, 50', 50") et l'élément de boîtier inférieur (20, 20', 20"), en particulier l'ensemble de lunette (50, 50'), l'élément de boîtier inférieur (20, 20') et le support inférieur (44), à travers l'orifice (25, 26) et/ou par le biais du bouton et/ou par le biais du module fonctionnel à l'intérieur de l'élément de boîtier inférieur (20, 20'), et
rotation de l'extrémité inférieure de l'ensemble de lunette (50, 50', 50"), en particulier par le biais de la force de l'élément à ressort, vers le bas et libérant ainsi l'élément de boîtier supérieur (60, 60').

22. Procédé destiné à démonter l'ensemble selon la revendication 21, comprenant en outre l'étape de
retrait de l'ensemble de lunette (50, 50', 50") en dehors de la liaison articulée avec le support (41') ou le support supérieur (41, 41').

23. Rétroviseur avec un ensemble selon une des revendications 1 à 18, dans lequel au moins un élément de rétroviseur est fixé à l'ensemble de lunette (50, 50', 50", 801), avec l'élément de rétroviseur qui comprend un élément réfléchissant (800) et/ou une caméra et l'ensemble d'articulation (30, 30', 30") est adapté à bouger au moins l'au moins un élément de rétroviseur.

24. Véhicule automobile avec au moins un rétroviseur selon la revendication 23, dans lequel au moins le support (41") ou support supérieur (41, 41') est fixé de manière mobile au véhicule automobile par le biais d'un ensemble de pied fixé au véhicule automobile.
